# EUROPEAN PATENT SPECIFICATION

(11) **EP 2 919 419 B1**
(45) Date of publication and mention of the grant of the patent: **17.10.2018**
(21) Application number: 13852397.2
(22) Date of filing: 17.04.2013
(51) Int. Cl.: H04L 12/24, H04W 24/02, H04L 12/721

(54) **WIRELESS LOCAL AREA NETWORK TRANSMISSION CONTROL METHODS, DEVICES AND SYSTEM**
ÜBERTRAGUNGSSTEUERUNGSVERFAHREN, -VORRICHTUNGEN UND -SYSTEM IN EINEM DRAHTLOSEN LOKALEN NETZWERK
PROCÉDÉS, DISPOSITIFS ET SYSTÈME DE COMMANDE DE LA TRANSMISSION DANS UN RÉSEAU LOCAL SANS FIL

(30) Priority: 07.11.2012 CN 201210440913
(43) Date of publication of application: 16.09.2015
(73) Proprietor: Huawei Technologies Co., Ltd., Longgang District Shenzhen, Guangdong 518129 (CN)
(72) Inventor: ZHANG, Junping, Shenzhen Guangdong 518129 (CN)
(74) Representative: Isarpatent
(86) International application number: PCT/CN2013/074303
(87) International publication number: WO 2014/071723

(56) References cited:
- WO-A1-2012/070173
- WO-A1-2012/081146
- WO-A1-2012/101689
- WO-A1-2012/130264
- CN-A- 101 335 666
- CN-A- 101 640 896
- CN-A- 101 795 465
- CN-A- 102 595 424
- US-A1- 2007 195 742
- US-A1- 2010 322 141
- US-A1- 2010 322 255
- US-A1- 2011 317 559
- US-A1- 2012 218 894

## Description

### TECHNICAL FIELD

Embodiments of the present invention relate to communications technologies and, in particular, to a wireless local area network transmission control method, a device, and a system.

### BACKGROUND

A wireless local area network (Wireless LAN, short for WLAN) system is based on an 802.11 standard protocol, which is a system used for satisfying wireless communications within a certain range. In recent years, the WLAN system has made a considerable progress, communications speed of a pint-point link has reached 1Gbps, and various peripheral protocol suites have also amounted to dozens, covering aspects such as mobility, switchover, quality of service (Quality of Service, short for QoS) and security etc.

In the WLAN system in the prior art, policy configuration needs to be performed to each network device in the system, and any change cannot be made after the configuration, which is not flexible for application. During a process where the network device performs processing and forwarding of a control signaling and service data according to the configured policy, a control plane is not separated from a service data plane, and the forwarding of the control signaling is not effective.

US 2012/218894 A1 discloses a switch device which can be configured to operate in a manner that was not originally intended. For example, a switch device can be a Broadcom XGS type of device that is configured with a packet-processing unit to perform line speed lookups in accordance with a default configuration. The default configuration can include classifying and forwarding received packets to an upstream interface based on VLAN information. The default configuration can be overwritten such that the switch device operates in a different manner than originally intended. For example, the switch device can be reconfigured to include mapping rules that specify different QoS data to be assigned to different type of received packets. Subsequent to utilizing the maps to identify QoS information for received packets, The reconfigured switch device uses the QoS information to forward the packets to queues in an upstream interface.

US 2007/195742 A1 discloses that a system and method for selectively controlling traffic in a network to improve network performance. The system includes a network controller that includes a first control-traffic prioritizer. An Access Point (AP) includes a second control-traffic prioritizer and communicates with the network controller. One or more clients communicate with the AP. The communications behavior of the client is affected by operations of the first control-traffic prioritizer and the second control-traffic prioritizer.

### SUMMARY

The invention is set out in the appended set of claims. The embodiments and/or examples of the following description which are not covered by the appended claims are considered as not being part of the present invention.

Embodiments of the present invention provide a wireless local area network transmission control method, a device, and a system, which are used to realize rapid deployment of configuration and separation of a control plane from a data plane, thereby improving the performance of a WLAN system.

In a first aspect, the embodiments of the present invention provide a wireless local area network transmission control method, including:
reporting, by a wireless local area network device, status information to a cloud control device to enable the cloud control device to generate configuration information according to the status information and send the configuration information to the wireless local area network device, wherein the status information comprises throughput of the wireless local area network device and interference conditions of the wireless local area network device;
receiving, by the wireless local area network device, the configuration information sent by the cloud control device, where the configuration information includes a control plane forwarding rule and a data plane forwarding rule, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data;
performing, by the wireless local area network device, configuration of a control plane network algorithm according to the control plane forwarding rule, and performing configuration of a data plane network algorithm according to the data plane forwarding rule, wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
sending, by the wireless local area network device, a received control signaling according to the control plane network algorithm, and sending received service data according to the data plane network algorithm.

In a first possible implementation mode according to the first aspect, the sending, by the wireless local area network device, a received control signaling according to the control plane network algorithm includes:
determining, by the wireless local area network device, a priority of the received control signaling according to the control plane network algorithm; and
sending, by the wireless local area network device, the control signaling received according to the priority of the control signaling.

In a second possible implementation mode according to the first aspect or the first possible implementation mode of the first aspect, the wireless local area network device is a fit access point, wherein the fit access point is an access point that can implement a part of Media Access Control, MAC, and Physical, PHY, functions;
before the receiving, by a wireless local area network device, configuration information sent by a cloud control device, the method further includes:
sending, by the fit access point, network access information to the cloud control device;
receiving, by the fit access point, operation setting information sent by the cloud control device according to the network access information, and setting an operation parameter of the fit access point according to the operation setting information;
broadcasting, by the fit access point, a beacon frame to enable a station to monitor the beacon frame and perform an association authentication with the cloud control device via the fit access point; and
after the station and the cloud control device pass the association authentication, accessing, by the fit access point, a network via the station.

In a third possible implementation mode according to the second possible implementation mode of the first aspect, the sending, by the wireless local area network device, received service data according to the data plane network algorithm is:
receiving, by the fit access point, uplink service data sent by the station, performing a decryption processing to the uplink service data, and sending the decrypted uplink service data according to the data plane network algorithm; or,
receiving, by the fit access point, downlink data sent by an intermediary device, performing an encryption processing to the downlink service data, and sending the encrypted downlink service data according to the data plane network algorithm.

In a fourth possible implementation mode according to the first aspect or the first possible implementation mode of the first aspect, the wireless local area network device is a fat access point, wherein the fat access point is an access point that can implement all MAC and PHY functions;
before the receiving, by a wireless local area network device, configuration information sent by a cloud control device, the method further includes:
sending, by the fat access point, network access information to the cloud control device;
receiving, by the fat access point, operation setting information sent by the cloud control device according to the network access information, and setting an operation parameter of the fat access point according to the operation setting information;
broadcasting, by the fat access point, a beacon frame to enable a station to monitor the beacon frame;
performing, by the fat access point, an association authentication with the station; and
after the fat access point and the station pass the association authentication, accessing, by the fat access point, a network via the station.

In a fifth possible implementation mode according to the fourth possible implementation mode of the first aspect, the sending, by the wireless local area network device, received service data according to the data plane network algorithm includes:
receiving, by the fat access point, uplink service data sent by the station, performing a decryption processing to the uplink service data, and sending the decrypted uplink service data according to the data plane network algorithm; or,
receiving, by the fat access point, downlink data sent by an intermediary device, performing an encryption processing to the downlink service data, and sending the encrypted downlink service data according to the data plane network algorithm.

In a sixth possible implementation mode according to the first aspect or the first possible implementation mode of the first aspect, the wireless local area network device is an intermediary device;
the sending, by the wireless local area network device, received service data according to the data plane network algorithm is:
sending, by the intermediary device, service data received from an access point to the cloud control device according to the data plane network algorithm; or
sending, by the intermediary device, service data received from the cloud control device to the access point according to the data plane network algorithm; or
sending, by the intermediary device, the service data received from the access point to other intermediary devices according to the data plane network algorithm.

In a second aspect, the embodiments of the present invention provide a wireless local area network transmission control method, including:
generating, by a cloud control device, configuration information according to received status information reported by multiple wireless local area network devices, wherein the status information comprises throughput of the multiple wireless local area network devices and interference conditions of the multiple wireless local area network devices;
sending, by the cloud control device, the configuration information to the multiple wireless local area network devices, where the configuration information includes a control plane forwarding rule and a data plane forwarding rule, to enable the multiple wireless local area network devices perform configuration of a control plane network algorithm according to the control plane forwarding rule, and to perform configuration of a data plane network algorithm according to the data plane forwarding rule, where the multiple wireless local area network devices at least include a first wireless local area network device and a second wireless local area network device, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data; wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
receiving, by the cloud control device, a control signaling sent by the first wireless local area network device according to the control plane network algorithm, and performing a control processing according to the control signaling or sending the control signaling to the second wireless local area network device; and
receiving, by the cloud control device, service data sent by the first wireless local area network device according to the data plane network algorithm, and performing a data processing to the service data or sending the service data to the second wireless local area network device.

In a first possible implementation mode according to the second aspect, the generating, by the cloud control device, the configuration information according to received status information reported by the multiple wireless local area network devices is:
allocating, by the cloud control device, a computing resource and a storage resource from at least one cloud processing unit, and generating the configuration information according to the status information via the allocated computing resource and storage resource.

In a second possible implementation mode according to the second aspect, the generating, by the cloud control device, the configuration information according to received status information reported by the multiple wireless local area network devices is:
acquiring, by the cloud control device, virtual network state information and virtual device quantity, allocating a virtual resource from at least one cloud processing unit according to the virtual network state information and the virtual device quantity that are acquired, and generating the configuration information according to the status information via the allocated virtual resource.

In a third aspect, the embodiments of the present invention provide a wireless local area network device, including:
a reporting unit, configured to report status information to a cloud control device to enable the cloud control device to generate configuration information according to the status information and send the configuration information to the wireless local area network device, wherein the status information comprises throughput of the wireless local area network device and interference conditions of the wireless local area network device;
a receiving unit, configured to receive the configuration information sent by the cloud control device, where the configuration information includes a control plane forwarding rule and a data plane forwarding rule, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data;
a configuring unit, coupled with the receiving unit, configured to perform configuration of a control plane network algorithm according to the control plane forwarding rule, and perform configuration of a data plane network algorithm according to the data plane forwarding rule, wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
a first processing unit, coupled with the configuring unit, configured to send a received control signaling according to the control plane network algorithm, and send received service data according to the data plane network algorithm.

In a fourth aspect, the embodiments of the present invention provide a cloud control device, including:
a configuration information generating unit, configured to generate configuration information according to received status information reported by multiple wireless local area network devices, wherein the status information comprises throughput of the multiple wireless local area network devices and interference conditions of the multiple wireless local area network devices;
a configuration sending unit, configured to send the configuration information to the multiple wireless local area network devices, where the configuration information includes a control plane forwarding rule and a data plane forwarding rule, to enable the multiple wireless local area network devices perform configuration of a control plane network algorithm according to the control plane forwarding rule, and perform configuration of a data plane network algorithm according to the data plane forwarding rule, where the multiple wireless local area network devices at least include a first wireless local area network device and a second wireless local area network device, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data; wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
a second processing unit, configured to receive a control signaling sent by the first wireless local area network device according to the control plane network algorithm, and perform a control processing according to the control signaling or send the control signaling to the second wireless local area network device; and
a third processing unit, configured to receive service data sent by the first wireless local area network device according to the data plane network algorithm, and perform a data processing to the service data or send the service data to the second wireless local area network device.

In a fifth aspect, the embodiments of the present invention provide a wireless local area network system, including a cloud control device according to the fourth aspect and a wireless local area network device according to the third aspect;
the cloud control device is configured to generate configuration information according to received status information reported by the wireless local area network device; and send configuration information to the wireless local area network device to enable the wireless local area network device to perform configuration of a control plane network algorithm and a data plane network algorithm according to the configuration information; and receive a control signaling sent by the wireless local area network device according to the control plane network algorithm, perform a corresponding processing according to the control signaling, or send the control signaling to other wireless local area network devices, wherein the control plane network algorithm comprises a rule of processing the control signaling according to priority of the control signaling, and the data plane network algorithm comprise a signaling rule for guaranteeing QoS and a rule for routing and forwarding the service data, wherein the status information comprises running status of the wireless local area network device, throughput of the wireless local area network device and interference conditions of the wireless local area network device;
the wireless local area network device is configured to report status information to the cloud control device to enable the cloud control device to generate configuration information; and receive configuration information sent by the cloud control device, perform configuration of a control plane network algorithm and a data plane network algorithm according to the configuration information; send a received control signaling according to the control plane network algorithm, and send received service data according to the data plane network algorithm.

It can be seen from technical solutions above that, in the wireless local area network transmission control method, device and system provided in the embodiments of the present invention, a wireless local area network device receives configuration information sent by a cloud control device, performs configuration of a control plane network algorithm and a data plane network algorithm according to the configuration information, sends a received control signaling according to the control plane network algorithm, and sends received service data according to the data plane network algorithm. In other words, the cloud control device may formulate corresponding configuration information according to a network requirement, and send the configuration information to the wireless local area network device in the system, a rapid deployment of configuration is achieved, and even if a system capacity changes, updating of the system policy may also be achieved by updating the configuration information, and application flexibility is improved. Updating of a network algorithm may be achieved without performing updating of a hardware system to the wireless local area network device, moreover, configuration of the control plane network algorithm and the data plane network algorithm is achieved according to the received configuration information sent by the cloud control device, furthermore, separation of a control plane from a data plane is achieved, and QoS is ensured, thereby improving the performance of the WLAN system.

### BRIEF DESCRIPTION OF DRAWINGS

In order to make technical solutions in embodiments of the present invention or the prior art clearer, accompanying drawings used for description of embodiments of the present invention or the prior art will be briefly described hereunder. Obviously, the described drawings are merely some embodiments of present invention. For persons skilled in the art, other drawings may be obtained based on these drawings without any creative efforts.
FIG. 1 is a flow chart of a first wireless local area network transmission control method provided in an embodiment of the present invention;
FIG. 2 is a flow chart of a second wireless local area network transmission control method provided in an embodiment of the present invention;
FIG. 3 is a flow chart of a third wireless local area network transmission control method provided in an embodiment of the present invention;
FIG. 4 is a flow chart of a fourth wireless local area network transmission control method provided in an embodiment of the present invention;
FIG. 5 is a schematic structural diagram of a first wireless local area network device provided in an embodiment of the present invention;
FIG. 6 is a schematic structural diagram of a second wireless local area network device provided in an embodiment of the present invention;
FIG. 7 is a schematic structural diagram of a first cloud control device provided in an embodiment of the present invention;
FIG. 8 is a schematic structural diagram of a second cloud control device provided in an embodiment of the present invention;
FIG. 9 is a schematic structural diagram of a wireless local area network system provided in an embodiment of the present invention;
FIG. 10 is a schematic structural diagram of a third wireless local area network device provided in an embodiment of the present invention;
FIG. 11 is a schematic structural diagram of a third cloud control device provided in an embodiment of the present invention.

### DESCRIPTION OF EMBODIMENTS

In order to make objectives, technical solutions, and advantages of embodiments of the present invention more clearly, the technical solutions in embodiments of the present invention are hereinafter described clearly and completely with reference to accompanying drawings in the embodiments of the present invention. Obviously, the described embodiments are only a part of the embodiments of the present invention, rather than all embodiments of the present invention. All other embodiments obtained by persons of ordinary skill in the art based on the embodiments described in the present invention without any creative efforts shall fall within the protection scope of the present invention.

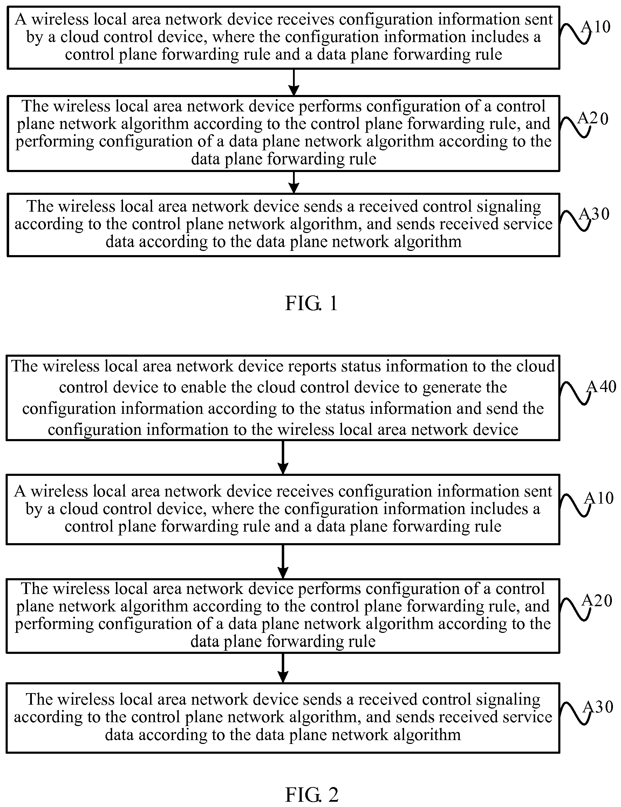

FIG. 1 is a flow chart of a first wireless local area network transmission control method provided in an embodiment of the present invention. As shown in FIG. 1, the wireless local area network transmission control method provided by this embodiment may be specifically applied in a transmission control process of a wireless local area network WLAN system. The WLAN system may specifically include a cloud control device, a cloud processing unit, an intermediary device, an access point (Access Point, short for AP) and a station (Station, short for STA). There may be multiple cloud processing units, which collaboratively perform service data processing. The cloud control device may be integrated in a physical server together with the multiple cloud processing units, the cloud processing units are implemented in a form of virtual machines, and the cloud control device and the multiple cloud processing units may also be arranged in different physical servers respectively, the arrangement manner is not limited to this embodiment. The intermediary device may be specifically but is not limited to a switch or a router.

The wireless local area network transmission control method provided in this embodiment specifically includes:
Step A10, a wireless local area network device receives configuration information sent by a cloud control device, where the configuration information includes a control plane forwarding rule and a data plane forwarding rule;
Step A20, the wireless local area network device performs configuration of a control plane network algorithm according to the control plane forwarding rule, and performing configuration of a data plane network algorithm according to the data plane forwarding rule;
Step A30, the wireless local area network device sends a received control signaling according to the control plane network algorithm, and sends received service data according to the data plane network algorithm.

Specifically, the cloud control device may generate corresponding configuration information according to network requirements such as a real-time change of a service, an operating status change of the wireless local area network device and a scenario application, and send the configuration information to the wireless local area network device in a system. The wireless local area network device may be specifically the intermediary device, the AP or the STA, for different wireless local area network devices, the configuration information sent by the cloud control device may be different.

Specifically, the configuration information includes but is not limited to: an identification of a device receiving the configuration information, which is an identification of the wireless local area network device in this embodiment; the control plane forwarding rule; the data plane forwarding rule.

The identification of the device receiving the configuration information includes but is not limited to an IP address; the control plane forwarding rule is used to match a control signaling from data transmitted in the network, and forward the control signaling according to the rule, the control plane forwarding rule includes but is not limited to: a control plane data identification, a control plane data type, and a rule for forwarding data when the data is in compliance with the control plane data identification and/or the control plane data type, at this time, the data is the control signaling.

The data plane forwarding rule is used to match service data from the data transmitted in the network, and forward the service data according to a rule, the data plane forwarding rule includes but is not limited to: a data plane data identification, a data plane data type, a forwarding priority type, a destination port, and a rule for forwarding data to a service processing device when the data is in compliance with the data plane data identification and/or the data plane data type; at this time, the data is the service data.

Or, the data plane forwarding rule includes but is not limited to: the data plane data identification, the data plane data type, the forwarding priority type, the destination port, and a rule for determining a priority of data according to the forwarding priority type and forwarding the data from the destination port according to the priority of the data when the data is in compliance with the data plane data identification and/or the data plane data type.

A software module is provided in the wireless local area network device, the software module may configure a control plane network algorithm and a data plane network algorithm respectively according to the control plane forwarding rule and the data plane forwarding rule in the configuration information sent by the cloud control device. The control plane network algorithm may be specifically a corresponding rule of preferentially processing the control signaling, the data plane network algorithm may specifically include a signaling rule for guaranteeing QoS and a rule for routing and forwarding. The wireless local area network device realizes processing and forwarding of the received service data according to the data plane network algorithm, a process of forwarding the service data may be controlled according to QoS between devices. The wireless local area network device realizes processing and forwarding of the received control signaling according to the control plane network algorithm, a process of forwarding the control signaling may also be controlled according to the QoS between devices, so that a separation of the data plane from the control plane is achieved.

In a wireless local area network transmission control method provided by this embodiment, a wireless local area network device receives configuration information sent by a cloud control device, performs configuration of a control plane network algorithm and a data plane network algorithm according to the configuration information, sends a received control signaling according to the control plane network algorithm, and sends received service data according to the data plane network algorithm. The cloud control device may formulate corresponding configuration information according to a network requirement, and send the configuration information to the wireless local area network device in the system, and achieves a rapid deployment of configuration. Even if a system capacity changes, updating of the system may also be achieved by updating the configuration information, which improves application flexibility. Updating of a network algorithm may be achieved without updating a hardware system of the wireless local area network device, furthermore, a control plane is separated from a data plane, QoS is ensured, and the performance of the WLAN system is improved.

FIG. 2 is a flow chart of a second wireless local area network transmission control method provided in an embodiment of the present invention. As shown in FIG. 2, in this embodiment, before step A10, which is the wireless local area network device receives the configuration information sent by the cloud control device, the method may also further include:
Step A40, the wireless local area network device reports status information to the cloud control device to enable the cloud control device to generate the configuration information according to the status information and send the configuration information to the wireless local area network device.

Specifically, during operation of the system, the wireless local area network device may report status information to the cloud control device in real time, the status information may specifically include information such as running status, throughput and interference conditions etc, the cloud control device generates corresponding configuration information according to the status information reported by each wireless local area network device to enable network transmission control to adapt to a current requirement of the network system.

Specifically, a manner for generating the configuration information based on the status information may be as follows: according to information such as the network throughput and interferences etc described in the status information, determining that a network operating mechanism needs to be changed, for instance, an internet download traffic is found to increase continuously in a certain region, but this region has a VOIP (Voice over Internet Protocol, internet phone) service, then generating a control plane network forwarding rule and a data plane network forwarding rule, where it is described in the rules that all VOIP control signalings and VOIP data are forwarded preferentially.

In this embodiment, the wireless local area network device sending the received control signaling according to the control plane network algorithm, may specifically include:
the wireless local area network device determines a priority of the received control signaling according to the control plane network algorithm;
the wireless local area network device sends the control signaling according to the priority of the control signaling.

Furthermore, the priority of the control signaling may be set according to QoS, and the QoS may be ensured by forwarding the control signaling according to the priority.

In a first application scenario, the wireless local area network device is a fit AP, the fit AP may implement a part of MAC (Media Access Control, media access control) and PHY (Physical, physical layer) functions. Before step A10, which is the wireless local area network device receives the configuration information sent by the cloud control device, the method may also further include:
the fit access point sends network access information to the cloud control device;
the fit access point receives operation setting information sent by the cloud control device according to the network access information, and sets an operation parameter of the fit access point according to the operation setting information, where the operation setting information includes but is not limited to: an working channel, a transmission power, a security mode, an address filtering manner, and a competition queue parameter;
the fit access point broadcasts a beacon frame, to enable a station to monitor the beacon frame and perform an association authentication with the cloud control device via the fit access point;
after the station and the cloud control device pass the association authentication, the fit access point accesses a network via the station.

Specifically, after the fit AP joins the network, the fit AP reports network access information to the cloud control device, the cloud control device generates operation setting information corresponding to the fit AP according to the network access information reported by the fit AP, and sends the operation setting information to the fit AP, where the operation setting information may be specifically used to configure an operation parameter and control information of the fit AP. After setting the operation parameter according to the operation setting information, the fit AP broadcasts a beacon frame (beacon), the beacon frame specifically carries an SSID (Service Set Identifier, service set identifier), the SSID is specifically an identification of a WiFi (Wireless Fidelity, wireless fidelity) sub-network. An STA monitors the beacon frame, establishes a connection with the fit AP after the beacon frame is monitored, and performs an association authentication with the cloud control device via the fit AP and an intermediary device. The STA which passes the association authentication accesses the network and start data interaction.

In the first application scenario, step A30, which is the wireless local area network device sends the received service data according to the data plane network algorithm may be specifically:
the fit access point receives uplink service data sent by the station, performs a decryption processing to the uplink service data, and sends the decrypted uplink service data according to the data plane network algorithm; or
the fit access point receives downlink data sent by an intermediary device, performs an encryption processing to the downlink service data, and sends the encrypted downlink service data according to the data plane network algorithm.

The fit AP has encryption and decryption functions, and the encryption and decryption functions may be implemented according to the 802.11 standard protocol specifically. The fit AP performs a decryption processing to the uplink data sent by the STA, and performs data encryption to the downlink data sent by the intermediary device, so as to improve security of data transmission.

In a second application scenario, the wireless local area network device is a fat access point, and the fat AP may implement all MAC and PHY functions. Before step A10, which is the wireless local area network device receives the configuration information sent by the cloud control device, the method may also further include:
the fat access point sends network access information to the cloud control device;
the fat access point receives operation setting information sent by the cloud control device according to the network access information, and sets an operation parameter of the fat access point according to the operation setting information;
the fat access point broadcasts a beacon frame to enable a station to monitor the beacon frame and perform an association authentication with the fat access point;
the fat access point performs the association authentication with the station;
after the fat access point and the station pass the association authentication, the fat access point access a network via the station.

Specifically, after the fat AP joins a network, the fat AP reports network access information to the cloud control device, the cloud control device generates operation setting information corresponding to the fat AP according to the network access information reported by the fat AP, and sends the operation setting information to the fat AP, where the operation setting information may be specifically used to configure an operation parameter and control information of the fat AP. After setting the operation parameter according to the operation setting information, the fat AP broadcasts a beacon frame (beacon), the beacon frame specifically carries an SSID. An STA monitors the beacon frame, performs an association authentication with the fat AP after the beacon frame is monitored. Since the fat AP may implement all MAC and PHY functions, then the STA does not need to perform an association authentication with the cloud control device, thereby achieving decentralization of authority. The STA that passes the association authentication accesses the network to start data interaction.

In the second application scenario, step A30 which is the wireless local area network device sends the received service data according to the data plane network algorithm may be specifically:
the fat access point receives uplink service data sent by the station, performs a decryption processing to the uplink service data, and sends the decrypted uplink service data according to the data plane network algorithm; or, the fat access point receives downlink data sent by an intermediary device, performs an encryption processing to the downlink service data, and sends the encrypted downlink service data according to the data plane network algorithm.

The fat AP has encryption and decryption functions, and the encryption and decryption functions may be implemented according to the 802.11 standard protocol specifically. The fat AP performs a decryption processing to the uplink data sent by the STA, and performs data encryption to the downlink data sent by the intermediary device, so as to improve security of data transmission.

In this embodiment, the wireless local area network device is an intermediary device; step A30 which is the wireless local area network device sends the received service data according to the data plane network algorithm may be specifically:
the intermediary device sends the service data received from an access point to the cloud control device according to the data plane network algorithm; or, the intermediary device sends the service data received from the cloud control device to the access point according to the data plane network algorithm; or
the intermediary device sends the service data received from the access point to other intermediary devices according to the data plane network algorithm.

In a third application scenario, the wireless local area network device is an intermediary device, a data plane is set in the cloud control device, then the intermediary device may forward service data received from the AP to the cloud control device, and the cloud control device then forwards the service data correspondingly.

In a fourth application scenario, the wireless local area network device is an intermediary device, and a data plane is not set in the cloud control device, then the intermediary device may forward service data to other intermediary devices directly.

In a fifth application scenario, the wireless local area network device is an STA, the STA receives configuration information sent by the cloud control device, performs configuration of a control plane network algorithm and a data plane network algorithm according to the configuration information, achieves sending of a control signaling according to the control plane network algorithm, and achieves forwarding of service data according to the data plane network algorithm.

In an implementation, an intermediary device, an AP and an STA in a WLAN system are provided with a resource reservation and control mechanism, that is, the intermediary device, the AP and the STA may all receive configuration information sent by a cloud control device and achieve a separation of a data plane from a control plane.

In another implementation, both an intermediary device and an AP in a WLAN system may be provided with a resource reservation and control mechanism, and an STA is not provided with the resource reservation and control mechanism.

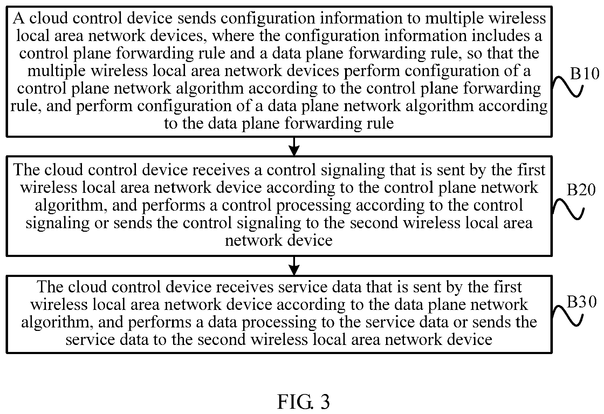

FIG. 3 is a flow chart of a third wireless local area network transmission control method provided in an embodiment of the present invention. As shown in FIG. 3, the wireless local area network transmission control method provided in this embodiment may be specifically applied in a transmission control process of a wireless local area network WLAN system, and may be implemented in cooperation with a method applied at the wireless local area network device side provided in the embodiments above, a specific implementation process will not be repeated herein.

A wireless local area network transmission control method provided in this embodiment specifically includes:
Step BI0, a cloud control device sends configuration information to multiple wireless local area network devices, where the configuration information includes a control plane forwarding rule and a data plane forwarding rule, so that the multiple wireless local area network devices perform configuration of a control plane network algorithm according to the control plane forwarding rule, and perform configuration of a data plane network algorithm according to the data plane forwarding rule, where, the multiple wireless local area network devices at least include a first wireless local area network device and a second wireless local area network device;
Step B20, the cloud control device receives a control signaling that is sent by the first wireless local area network device according to the control plane network algorithm, and performs a control processing according to the control signaling or sends the control signaling to the second wireless local area network device; and
Step B30, the cloud control device receives service data that is sent by the first wireless local area network device according to the data plane network algorithm, and performs a data processing to the service data or sends the service data to the second wireless local area network device.

Specifically, as for different service implementation processes, control signalings generated during an interaction between devices in the wireless local area network are also different, a corresponding function may be implemented via a corresponding processing of these control signalings.

Not only a control plane is provided in a cloud control device to achieve control processing and forwarding of a control signaling received, but also a data plane may be provided to achieve data processing and forwarding of service data received. In the wireless local area network transmission control method provided in this embodiment, a cloud control device sends configuration information to multiple wireless local area network devices, where the configuration information includes a control plane forwarding rule and a data plane forwarding rule to enable the multiple wireless local area network devices to perform configuration of a control plane network algorithm and a data plane network algorithm according to the configuration information, receives a control signaling sent by a first wireless local area network device according to the control plane network algorithm and performs a control processing according to the control signaling or sends the control signaling to a second wireless local area network device; and receives service data sent by the first wireless local area network device according to the data plane network algorithm, and performs a data processing to the service data or sends the service data to the second wireless local area network device.

The cloud control device may formulate corresponding configuration information according to a network requirement, and send the configuration information to the wireless local area network devices in the system, a rapid deployment of configuration is achieved, and even if a system capacity changes, system updating may also be achieved by updating the configuration information, improving application flexibility. The wireless local area network device may achieve updating of a network algorithm without updating of a hardware system, and furthermore, a control plane is separated from a data plane, and QoS is ensured, thereby improving the performance of the WLAN system.

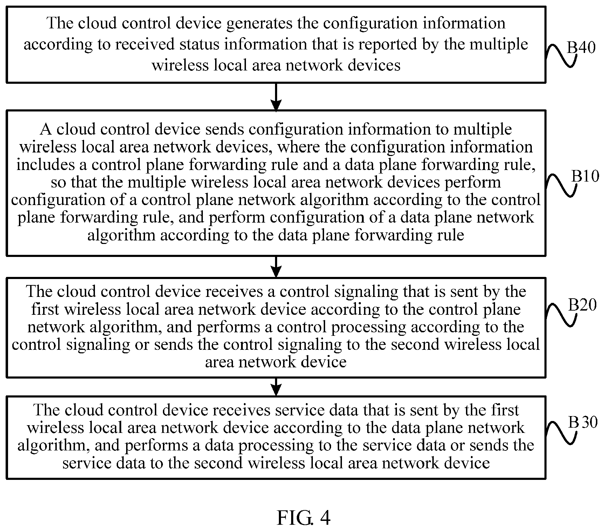

FIG. 4 is a flow chart of a fourth wireless local area network transmission control method provided in an embodiment of the present invention. As shown in FIG. 4, in this embodiment, before step B10, which is the cloud control device sends the configuration information to the multiple wireless local area network devices, the method may also further include:
Step B40, the cloud control device generates the configuration information according to received status information that is reported by the multiple wireless local area network devices.

A manner for generating the configuration information based on the status information may be as follows: according to information such as network throughput and interferences described in the status information, determining that a network operating mechanism needs to be changed, for instance, an internet download traffic is found to increase continuously in a certain region, but this region has a VOIP service, then generating a control plane network forwarding rule and a data plane network forwarding rule, where it is described in the rules that all VOIP control signalings and VOIP data are forwarded preferentially. A manner for generating configuration information based on status information is not limited in the present invention.

Optionally, the generating, by the cloud control device, the configuration information according to the received status information that is reported by the multiple wireless local area network devices is:
the cloud control device allocates a computing resource and a storage resource from at least one cloud processing unit, and generates the configuration information according to the status information via the allocated computing resource and storage resource. During practical application, a cloud control device and at least one cloud processing unit form a cloud processing center, the cloud processing center generally includes multiple cloud processing units, each cloud processing unit has a computing resource and a storage resource, the cloud control device allocates the computing resources and the storage resources according to a set algorithm rule, may also allocate the resources according to the number of STAs and traffic, and may also allocate according to other manners, which is not limited to this embodiment.

Optionally, the generating, by the cloud control device, the configuration information according to the received status information that is reported by the multiple wireless local area network devices is specifically:
the cloud control device acquires virtual network state information and virtual device quantity, allocates a virtual resource from at least one cloud processing unit according to the virtual network state information and the virtual device quantity acquired, and generates the configuration information according to the status information via the allocated virtual resource.

In another implementation mode, the cloud control device may also virtualize an entire network and virtualize devices, and allocate a resource according to the virtualized network and the virtualized device quantity.

Resource sharing and redundancy backup may be performed between cloud processing units. A storing manner of a cloud processing unit may be distributed storing, a computing manner may be parallel processing, and a manner for requesting a resource may be task queue.

The cloud processing center processes information of the entire network, coordinates operation of the entire network, and controls the entire network. Each cloud processing unit may include the following cooperation information: association information of an STA, status information of a cell edge STA, entire network information of a virtual network, information of a virtual AP, information backup for internal unit switchover, etc. Cloud processing units may also cooperate, and, besides cooperation information inside the cloud processing units, a cooperation between the cloud processing units may also include total load information of the units, information about hardware and software of the units, information backup for real-time switchover between the units, etc.

A cooperation of the cloud processing center mainly includes the following conditions:
(1) User location change: a switchover of a virtual network (cloud-side control status information transfer) and cloud-side control simulcast (a packet loss and a time delay may be satisfied);
(2) User service change: a change of a requirement for inherent load and type of a user, including that a cloud side controls and processes resource allocation and the cloud side controls resource reservation in a channel via a control plane;
(3) Interference change: a change of the number of APs, STAs or other WIFI devices of an entire network, cooperating to adjust a virtual network and a virtual resource at a region of a change point (power, access frequency, access slot change);
(4) Intermediary device and cloud-side resource change: an intermediary network device change and a cloud-side device change, cooperating to adjust virtual network channel resources and cloud-side processor resources.

In this embodiment, before step B40, which is the cloud control device generates the configuration information according to the status information, the method may also further include:
the cloud control device determines a cloud processing unit that operates normally in the system, and determines the at least one cloud processing unit from the cloud processing unit that operates normally.

Specifically, the number of cloud processing units in a system is not fixed, a new cloud processing unit may be added according to a need, a cloud processing unit may also be reduced according to a need, and the cloud processing unit may also have a malfunction during operation. Then the cloud control device may monitor a cloud processing unit that operate normally in the system in real time, and from all cloud processing units that operate normally for generating the configuration information, or determine at least two from the cloud processing units that operate normally for generating the configuration information.

During an actual implementation, when a new cloud processing unit is added when the system needs to be expanded, the cloud control device may learn of the newly added cloud processing unit by real time monitoring, the newly added cloud processing unit may also report its own status information to the cloud control device, so that the cloud control device may be informed of the newly added cloud processing unit. The cloud control device takes all cloud processing units in the system into consideration, and uniformly allocates resources to process the configuration information.

During an operation of the system, backup of data and processing status may be achieved between cloud processing units, that is, a cloud processing unit synchronizes the processing status information to other cloud processing units in real time during the operation, and when the cloud processing unit have a malfunction, the cloud control device may control other cloud processing units that operate normally to replace the malfunctioning cloud processing unit. The cloud control device may perform an automatic expansion and automatic backup according to a service requirement or a system requirement, and application flexibility of the system is further improved.

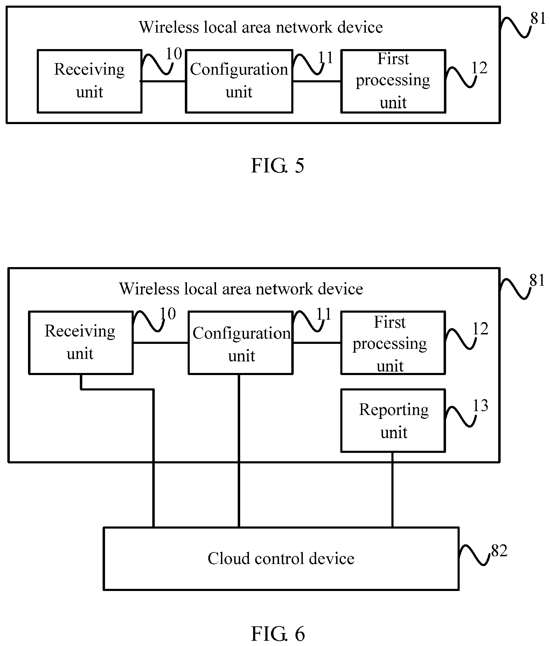

FIG. 5 is a schematic structural diagram of a first wireless local area network device provided in an embodiment of the present invention. As shown in FIG. 5, a wireless local area network device 81 provided in this embodiment may specifically implement steps of the wireless local area network transmission control method applied in the wireless local area network device, which is provided in any embodiment of the present invention, and a specific implementation process thereof will not be repeated herein. The wireless local area network device 81 may be specifically an intermediary device, an AP and an STA etc. The wireless local area network device 81 specifically includes a receiving unit 10, a configuring unit 11 and a first processing unit 12. The receiving unit 10 is configured to receive configuration information sent by a cloud control device, where the configuration information includes a control plane forwarding rule and a data plane forwarding rule; the configuring unit 11 is coupled with the receiving unit 10 and is configured to perform configuration of a control plane network algorithm according to the control plane forwarding rule, and perform configuration of a data plane network algorithm according to the data plane forwarding rule; the first processing unit 12 is coupled with the configuring unit 11 and is configured to send a received control signaling according to the control plane network algorithm, and send received service data according to the data plane network algorithm.

The cloud control device may formulate corresponding configuration information according to a network requirement, and send the configuration information to the wireless local area network device 81 in the system, a rapid deployment of configuration is achieved, and even if a system capacity changes, system updating may also be achieved by updating the configuration information, improving application flexibility. The wireless local area network device 81 may achieve updating of a network algorithm without updating of a hardware system, and furthermore, a control plane is separated from a data plane, and QoS is ensured, thereby improving the performance of the WLAN system.

FIG. 6 is a schematic structural diagram of a second wireless local area network device provided in an embodiment of the present invention. As shown in FIG. 6, in this embodiment, the wireless local area network device 81 may also further include a reporting unit 13, and the reporting unit 13 is configured to report status information to a cloud control device 82 to enable the cloud control device 82 to generate the configuration information according to the status information and send the configuration information to the configuring unit 11 in the wireless local area network device 81.

Specifically, during operation of the system, the reporting unit 13 of the wireless local area network device 81 may report status information to the cloud control device 82 in real-time, the status information may specifically include information such as a running status, throughput and interference conditions etc, the cloud control device 82 generates corresponding configuration information according to the status information reported by the reporting unit 13 in each wireless local area network device 81 to enable network transmission control to adapt to a current requirement of the network system.

In this embodiment, the first processing unit 12 may be specifically configured to determine a priority of the received control signaling according to the control plane network algorithm, and send the received control signaling according to the priority of the control signaling.

In this embodiment, the wireless local area network device 81 is a fit access point; the wireless local area network device 81 further includes a sending unit and a broadcasting unit. The sending unit is configured to send network access information to the cloud control device. The receiving unit 10 is further configured to receive operation setting information sent by the cloud control device according to the network access information, and set an operation parameter of the fit access point according to the operation setting information. The broadcasting unit is configured to broadcast a beacon frame to enable a station to monitor the beacon frame and perform an association authentication with the cloud control device via the fit access point.

In this embodiment, the first processing unit 12 is specifically configured to receive uplink service data sent by the station, perform a decryption processing to the uplink service data, and send the decrypted uplink service data according to the data plane network algorithm; or receive downlink data sent by an intermediary device, perform an encryption processing to the downlink service data, and send the encrypted downlink service data according to the data plane network algorithm.

In this embodiment, the wireless local area network device 81 is a fat access point; the wireless local area network device 81 further includes a sending unit, a broadcasting unit, and an association authenticating unit. The sending unit is configured to send network access information to the cloud control device. The receiving unit 10 is further configured to receive operation setting information which is sent by the cloud control device according to the network access information, and set an operation parameter of the fat access point according to the operation setting information. The broadcasting unit is configured to broadcast a beacon frame to enable a station to monitor the beacon frame and perform an association authentication with the fat access point. The association authenticating unit is configured to perform an association authentication with the station.

In this embodiment, the first processing unit 12 is specifically configured to receive uplink service data sent by the station, perform a decryption processing to the uplink service data, and send the decrypted uplink service data according to the data plane network algorithm; or receive downlink data sent by an intermediary device, perform an encryption processing to the downlink service data, and send the encrypted downlink service data according to the data plane network algorithm.

In this embodiment, the wireless local area network device 81 is an intermediary device; the first processing unit 12 is specifically configured to send the service data received from an access point to the cloud control device according to the data plane network algorithm; or, send the service data received from the cloud control device to the access point according to the data plane network algorithm; or, send the service data received from the access point to other intermediary devices according to the data plane network algorithm.

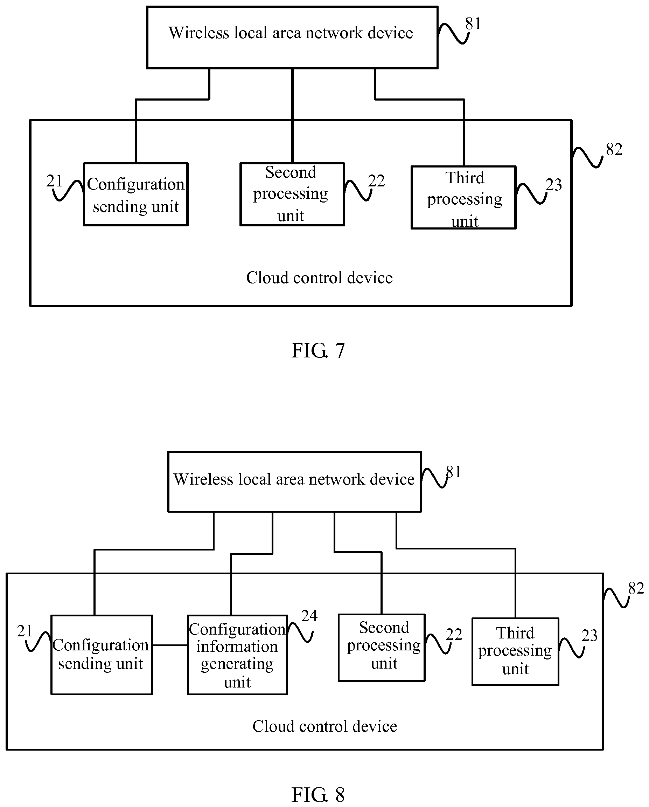

FIG. 7 is a schematic structural diagram of a first cloud control device provided in an embodiment of the present invention. As shown in FIG. 7, a cloud control device 82 provided in this embodiment may specifically implement steps of the wireless local area network transmission control method applied in the cloud control device, which is provided in any embodiment of the present invention, a specific implementation process thereof will not be repeated herein. The cloud control device 82 specifically includes a configuration sending unit 21, a second processing unit 22, and a third processing unit 23.

The configuration sending unit 21 is configured to send configuration information to multiple wireless local area network devices, where the configuration information includes a control plane forwarding rule and a data plane forwarding rule, so that the multiple wireless local area network devices perform configuration of a control plane network algorithm according to the control plane forwarding rule, and perform configuration of a data plane network algorithm according to the data plane forwarding rule, where the multiple wireless local area network devices at least include a first wireless local area network device and a second wireless local area network device. In this embodiment, the wireless local area network device 81 is described by taking the first wireless local area network device as an example.

The second processing unit 22 is configured to receive a control signaling sent by the first wireless local area network device according to the control plane network algorithm, and perform controlling according to the control signaling or send the control signaling to the second wireless local area network device.

The third processing unit 23 is configured to receive service data sent by the first wireless local area network device according to the data plane network algorithm, and perform a data processing to the service data, or send the service data to the second wireless local area network device.

The cloud control device 82 provided in this embodiment may formulate corresponding configuration information according to a network requirement, and send the configuration information to the wireless local area network device in the system, a rapid deployment of configuration is achieved, and even if a system capacity changes, system updating may also be achieved by updating the configuration information, which improves application flexibility. The wireless local area network device may achieve updating of a network algorithm without updating a hardware system, and furthermore, a control plane is separated from a data plane, and QoS is ensured, thereby improving the performance of the WLAN system.

FIG. 8 is a schematic structural diagram of a second cloud control device provided in an embodiment of the present invention. As shown in FIG. 8, in this embodiment, the cloud control device 82 may also further include a configuration information generating unit 24, and the configuration information generating unit 24 is configured to generate the configuration information according to received status information reported by the multiple wireless local area network devices as. In this embodiment, the configuration information generating unit 24 is configured to generate the configuration information according to received status information reported by the wireless local area network device 81.

In this embodiment, the configuration information generating unit 24 may be specifically configured to allocate a computing resource and a storage resource from at least one cloud processing unit, and generate the configuration information according to the status information via the allocated computing resource and storage resource. Specifically, the configuration information generating unit 24 is configured to acquire virtual network state information and virtual device quantity, allocate a virtual resource from at least one cloud processing unit according to the virtual network state information and the virtual device quantity acquired, and generate the configuration information according to the status information via the allocated virtual resource.

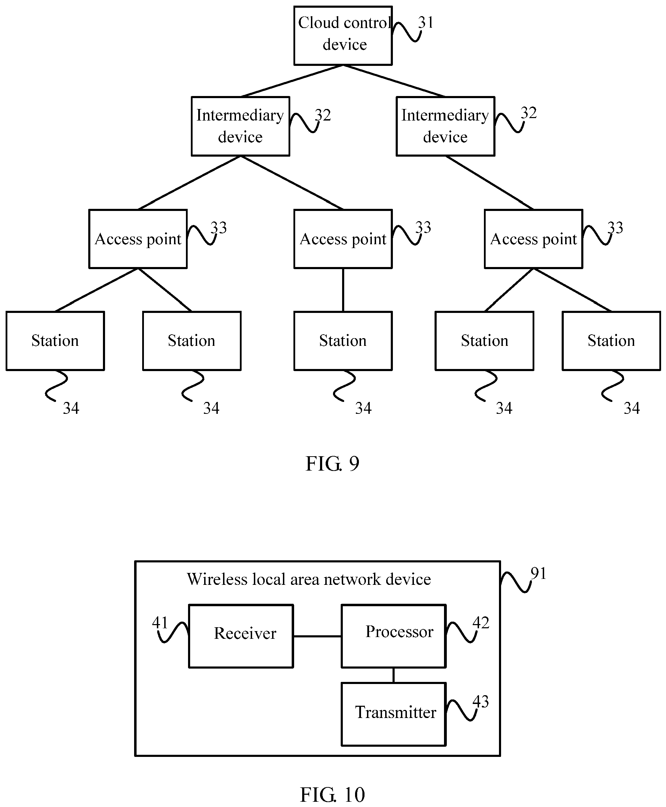

FIG. 9 is a schematic structural diagram of a wireless local area network system provided in an embodiment of the present invention. As shown in FIG. 9, a wireless local area network system provided in this embodiment may specifically implement steps of the wireless local area network transmission control method provided in any embodiment of the present invention, and a specific implementation process thereof and a technical effect achieved will not be repeated herein.

The wireless local area network system provided in this embodiment specifically includes a cloud control device 31 and a wireless local area network device, where the wireless local area network device includes intermediary devices 32, access points 33 and stations 34.

The cloud control device 31 may be configured to process computation and data storage required in a network formed by the intermediary devices 32, the access points 33 and the stations 34, and moreover, the intermediary devices 32, the access points 33 and the stations 34 can send information that needs to be stored and computed to the cloud control device 31, the cloud control device may perform corresponding computation and storage according to an algorithm rule, the computation and the storage may be completed by multiple CPUs, multiple processing units, multiple storage units and multiple data centers together, the entire cloud control device 31 includes multiple processing units, multiple storage units and multiple data centers.

The intermediary devices 32 include but are not limited to a switch and a router, and can process a data service and a control signaling, a new network algorithm may be performed by updating a software module, and a new data and control processing is performed according to the new network algorithm.

As WLAN access devices, the access points 33 include a physical layer (Physical, short for PHY) and a part of medium access control layer (Medium Access Control, short for MAC) functions of a WLAN, can process access of a WLAN terminal device, and can complete MAC and algorithm control processing with the cloud control device 31 together, can process a data service and a control signaling, can perform a new network algorithm by updating a software module and perform new data and control processing according to the new network algorithm.

As WLAN terminal devices, the stations 34 include a WLAN function, can access the access points 33 by way of a WLAN, and can process a data service and a control signaling, can perform a new network algorithm by updating a software module, and perform a new data and control processing according to the new network algorithm.

Furthermore, in the present invention, the cloud control device 31 is configured to send configuration information to the wireless local area network device to enable the wireless local area network device to perform configuration of a control plane network algorithm and a data plane network algorithm according to the configuration information; and receive a control signaling that is sent by the wireless local area network device according to the control plane network algorithm, and perform corresponding processing according to the control signaling or send the control signaling to other wireless local area network devices. The wireless local area network device is configured to receive the configuration information sent by the cloud control device 31, perform configuration of the control plane network algorithm and the data plane network algorithm according to the configuration information; send a received control signaling according to the control plane network algorithm, and send received service data according to the data plane network algorithm.

The number of all the intermediary devices 32, the access points 33 and the stations 34 in the system may be set specifically according to an actual demand. FIG. 9 only shows a possible networking manner, but the present invention is not limited to this embodiment.

In this embodiment, all the intermediary devices, the APs and the STAs are provided with a resource reservation and control mechanism, that is, all the intermediary devices, the APs and the STAs may receive configuration information sent by a cloud control device and achieve a separation of a data plane from a control plane. The cloud control device only implement the control plane, but does not implement the data plane, and data forwarding may be implemented between the intermediary devices. The APs are fit APs, which may implement a part of MAC and PHY functions, an association authentication of the STAs is implemented by the cloud control device.

In another implementation, the intermediary devices and the APs may be set with a resource reservation and control mechanism, and the STAs are not set with the resource reservation and control mechanism. The cloud control device only implement the control plane, but does not implement the data plane, and data forwarding may be implemented between the intermediary devices. The APs are fit APs, which may implement a part of MAC and PHY functions, an association authentication of the STAs is implemented by the cloud control device.

In still another implementation, all the intermediary devices, the APs and the STAs are set with a resource reservation and control mechanism. The cloud control device implements a control plane and a data plane simultaneously, and the intermediary devices implement data forwarding via the cloud control device. The APs are fit APs, which may implement a part of MAC and PHY functions, an association authentication of the STAs is implemented by the cloud control device.

In still another implementation, all the APs and the STAs are set with a resource reservation and control mechanism. The cloud control device implements a control plane and a data plane simultaneously, and the intermediary devices implement data forwarding via the cloud control device. The APs are fat APs, which may implement all MAC and PHY functions, an association authentication of the STAs is implemented by the APs.

In still another implementation, the intermediary devices and the APs may be set with a resource reservation and control mechanism, and the STAs are not set with the resource reservation and control mechanism. The cloud control device implements a control plane and a data plane simultaneously, and the intermediary devices implement data forwarding via the cloud control device. The APs are fit APs, which may implement a part of MAC and PHY functions, an association authentication of the STAs is implemented by the cloud control device.

Certainly, this embodiment only provides several implementation modes, but the present invention is not limited thereto. During a practical application, implementation modes of the cloud control device, the APs and the STAs may be set according to an actual network requirement so as to control data transmission of the WLAN system flexibly.

A wireless local area network transmission control method, a device and a system provided in embodiments of the present invention achieve a separation of a control plane from a data plane, so that a network is more controllable and network operation and maintenance efficiency is improved. As for a software-defined network, a soft transformation may be performed to the entire network algorithm by sending configuration, replacement of hardware etc is not needed, and it is convenient to change the network algorithm. Moreover, cloud controls unified management of back-end virtual resources, a cooperative effect is improved, and user perception is improved via network virtualization. Network intelligence is improved via network device self-perception and self-backup, and a network breakage rate as well as maintenance and upgrade costs are reduced. Clouding and virtualization of the processing resources and the network are realized, and a distribution can be performed according to demands, thereby further achieving gradual upgrade and expansion.

FIG. 10 is a schematic structural diagram of a third wireless local area network device provided in an embodiment of the present invention. As shown in FIG. 10, a wireless local area network device 91 provided in this embodiment may specifically implement steps of the wireless local area network transmission control method applied in the wireless local area network device 91 provided in any embodiment of the present invention, and a specific implementation process thereof will not be repeated herein. The wireless local area network device 91 specifically includes a receiver 41, a processor 42 and a transmitter 43. The receiver 41 is configured to receive configuration information sent by a cloud control device, where the configuration information includes a control plane forwarding rule and a data plane forwarding rule; the processor 42 is coupled with the receiver 41 and is configured to perform configuration of a control plane network algorithm according to the control plane forwarding rule, and perform configuration of a data plane network algorithm according to the data plane forwarding rule. The transmitter 43 is coupled with the processor 42 and is configured to send a received control signaling according to the control plane network algorithm, and send received service data according to the data plane network algorithm.

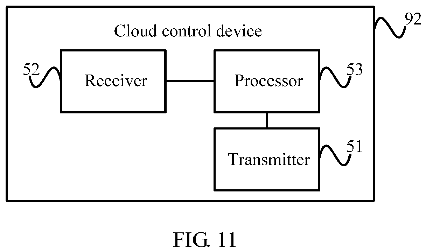

FIG. 11 is a schematic structural diagram of a third cloud control device provided in an embodiment of the present invention. As shown in FIG. 11, a cloud control device 92 provided in this embodiment may specifically implement steps of the wireless local area network transmission control method applied in the cloud control device provided in any embodiment of the present invention, and a specific implementation process thereof will not be repeated herein. The cloud control device 92 specifically includes a transmitter 51, a receiver 52 and a processor 53.

The transmitter 51 is configured to send configuration information to multiple wireless local area network devices, where the configuration information includes a control plane forwarding rule and a data plane forwarding rule, so that the multiple wireless local area network devices perform configuration of a control plane network algorithm according to the control plane forwarding rule, and perform configuration of a data plane network algorithm according to the data plane forwarding rule, where the multiple wireless local area network devices at least include a first wireless local area network device and a second wireless local area network device.

The receiver 52 is configured to receive a control signaling sent by the first wireless local area network device according to the control plane network algorithm, and the receiver 52 is further configured to receive service data sent by the first wireless local area network device according to the data plane network algorithm.

The processor 53 is coupled with the transmitter 51 and the receiver 52 respectively and is configured to perform controlling according to the control signaling, or sending the control signaling to the second wireless local area network device via the transmitter 51; and is configured to perform a data processing according to the service data, or send the service data to the second wireless local area network device.

Persons of ordinary skill in the art may understand that, all or a part of steps of the foregoing method embodiments may be implemented by a program instructing relevant hardware. The foregoing program may be stored in a computer readable storage medium. When the program runs, the steps of the foregoing method embodiments are executed. The foregoing storage medium includes various mediums capable of storing program codes, such as a ROM, a RAM, a magnetic disk, or an optical disc.

Finally, it should be noted that the foregoing embodiments are merely intended for describing technical solutions of the present invention rather than limiting the present invention. The invention is set forth in the appended claims.

## Claims

1. A wireless local area network transmission control method, comprising:
reporting (A40), by a wireless local area network device, status information to a cloud control device to enable the cloud control device to generate configuration information according to the status information and send the configuration information to the wireless local area network device, wherein the status information comprises throughput of the wireless local area network device and interference conditions of the wireless local area network device;
receiving (A10), by the wireless local area network device, the configuration information sent by the cloud control device, wherein the configuration information comprises a control plane forwarding rule and a data plane forwarding rule, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data;
performing (A20), by the wireless local area network device, configuration of a control plane network algorithm according to the control plane forwarding rule, and performing configuration of a data plane network algorithm according to the data plane forwarding rule, wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
sending (A30), by the wireless local area network device, a received control signaling according to the control plane network algorithm, and sending received service data according to the data plane network algorithm.

2. The wireless local area network transmission control method according to claim 1, wherein the sending, by the wireless local area network device, a received control signaling according to the control plane network algorithm comprises:
determining, by the wireless local area network device, a priority of the received control signaling according to the control plane network algorithm; and
sending, by the wireless local area network device, the received control signaling according to the priority of the control signaling.

3. The wireless local area network transmission control method according to claim 1 or 2, wherein, the wireless local area network device is a fit access point, wherein the fit access point is an access point that can implement a part of Media Access Control, MAC, and Physical, PHY, functions;
before the receiving, by a wireless local area network device, configuration information sent by a cloud control device, the method further comprises:
sending, by the fit access point, network access information to the cloud control device;
receiving, by the fit access point, operation setting information sent by the cloud control device according to the network access information, and setting an operation parameter of the fit access point according to the operation setting information;
broadcasting, by the fit access point, a beacon frame to enable a station to monitor the beacon frame and perform an association authentication with the cloud control device via the fit access point; and
after the station and the cloud control device pass the association authentication, accessing, by the fit access point, a network via the station.

4. The wireless local area network transmission control method according to claim 3, wherein the sending, by the wireless local area network device, received service data according to the data plane network algorithm, is:
receiving, by the fit access point, uplink service data sent by the station, performing a decryption processing to the uplink service data, and sending the decrypted uplink service data according to the data plane network algorithm; or,
receiving, by the fit access point, downlink data sent by an intermediary device, performing an encryption processing to the downlink service data, and sending the encrypted downlink service data according to the data plane network algorithm.

5. The wireless local area network transmission control method according to claim 1 or 2, wherein the wireless local area network device is a fat access point, wherein the fat access point is an access point that can implement all MAC and PHY functions;
before the receiving, by a wireless local area network device, configuration information sent by a cloud control device, the method further comprises:
sending, by the fat access point, network access information to the cloud control device;
receiving, by the fat access point, operation setting information sent by the cloud control device according to the network access information, and setting an operation parameter of the fat access point according to the operation setting information;
broadcasting, by the fat access point, a beacon frame to enable a station to monitor the beacon frame;
performing, by the fat access point, an association authentication with the station; and
after the fat access point and the station pass the association authentication, accessing, by the fat access point, a network via the station.

6. The wireless local area network transmission control method according to claim 5, wherein the sending, by the wireless local area network device, received service data according to the data plane network algorithm comprises:
receiving, by the fat access point, uplink service data sent by the station, performing a decryption processing to the uplink service data, and sending the decrypted uplink service data according to the data plane network algorithm; or,
receiving, by the fat access point, downlink data sent by an intermediary device, performing an encryption processing to the downlink service data, and sending the encrypted downlink service data according to the data plane network algorithm.

7. The wireless local area network transmission control method according to claim 1 or 2, wherein the wireless local area network device is an intermediary device connected between the cloud control device and access point;
the sending, by the wireless local area network device, received service data according to the data plane network algorithm, is:
sending, by the intermediary device, according to the data plane network algorithm, service data received from an access point to the cloud control device; or
sending, by the intermediary device, according to the data plane network algorithm, service data received from the cloud control device to the access point; or
sending, by the intermediary device, according to the data plane network algorithm, service data received from the access point to other intermediary devices.

8. A wireless local area network transmission control method, comprising:
generating (B40), by a cloud control device, configuration information according to received status information reported by multiple wireless local area network devices, wherein the status information comprises throughput of the multiple wireless local area network devices and interference conditions of the multiple wireless local area network devices;
sending (B10), by the cloud control device, the configuration information to the multiple wireless local area network devices, wherein the configuration information comprises a control plane forwarding rule and a data plane forwarding rule, to enable the multiple wireless local area network devices to perform configuration of a control plane network algorithm according to the control plane forwarding rule, and perform configuration of a data plane network algorithm according to the data plane forwarding rule, wherein the multiple wireless local area network devices at least comprise a first wireless local area network device and a second wireless local area network device, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data; wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
receiving (B20), by the cloud control device, a control signaling sent by the first wireless local area network device according to the control plane network algorithm, and performing a control processing according to the control signaling or sending the control signaling to the second wireless local area network device; and
receiving (B30), by the cloud control device, service data sent by the first wireless local area network device according to the data plane network algorithm, and performing a data processing to the service data or sending the service data to the second wireless local area network device.

9. The wireless local area network transmission control method according to claim 8, wherein the generating, by the cloud control device, the configuration information according to received status information reported by the multiple wireless local area network devices, is:
allocating, by the cloud control device, a computing resource and a storage resource from at least one cloud processing unit, and generating the configuration information according to the status information via the computing resource and the storage resource that are allocated.

10. The wireless local area network transmission control method according to claim 8, wherein the generating, by the cloud control device, the configuration information according to received status information reported by the multiple wireless local area network devices, is:
acquiring, by the cloud control device, virtual network state information and virtual device quantity, allocating a virtual resource from at least one cloud processing unit according to the virtual network state information and the virtual device quantity that are acquired, and generating the configuration information according to the status information via the virtual resource allocated.

11. A wireless local area network device (81), comprising:
a reporting unit (13), configured to report status information to a cloud control device to enable the cloud control device to generate configuration information according to the status information and send the configuration information to the wireless local area network device, wherein the status information comprises throughput of the wireless local area network device and interference conditions of the wireless local area network device;
a receiving unit (10), configured to receive the configuration information sent by the cloud control device, wherein the configuration information comprises a control plane forwarding rule and a data plane forwarding rule, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data;
a configuring unit (11), coupled with the receiving unit and configured to perform configuration of a control plane network algorithm according to the control plane forwarding rule, and perform configuration of a data plane network algorithm according to the data plane forwarding rule, wherein the control plane network algorithm comprises a rule of sending the control signaling according to priority of the control signaling, and the data plane network algorithm comprise a signaling rule for guaranteeing Quality of Service, QoS, and a rule for routing and forwarding the service data;
a first processing unit (12), coupled with the configuring unit and configured to send a received control signaling according to the control plane network algorithm, and send received service data according to the data plane network algorithm.

12. A cloud control device (82), comprising:
a configuration information generating unit (24), configured to generate configuration information according to received status information reported by multiple wireless local area network devices, wherein the status information comprises throughput of the multiple wireless local area network devices and interference conditions of the multiple wireless local area network devices;
a configuration sending unit (21), configured to send the configuration information to the multiple wireless local area network devices, wherein the configuration information comprises a control plane forwarding rule and a data plane forwarding rule, to enable the multiple wireless local area network devices to perform configuration of a control plane network algorithm according to the control plane forwarding rule, and perform configuration of a data plane network algorithm according to the data plane forwarding rule, wherein the multiple wireless local area network devices at least comprise a first wireless local area network device and a second wireless local area network device, wherein the control plane forwarding rule comprises: a control plane data identification, a control plane data type, and a rule for forwarding data when a data is in compliance with the control plane data identification and/or the control plane data type, and when the data is in compliance with the control plane data identification and/or the control plane data type, the data is control signaling, and the data plane forwarding rule comprises: a data plane data identification, a data plane data type, a forwarding priority type, a destination port, and a rule for determining a priority of a data according to the forwarding priority type and forwarding the data from the destination port according to the priority of the data when the data is in compliance with the data plane data identification and/or the data plane data type, and when the data is in compliance with the data plane data identification and/or the data plane data type, the data is service data, and forwarding the service data; wherein the control plane network algorithm comprises a corresponding rule of sending the control signaling according to priority of the control signaling, and the data plane network algorithm comprise a signaling rule for guaranteeing Quality of Service, QoS, and a rule for routing and forwarding the service data;
a second processing unit (22), configured to receive a control signaling sent by the first wireless local area network device according to the control plane network algorithm, and perform a control processing according to the control signaling or send the control signaling to the second wireless local area network device; and
a third processing unit (23), configured to receive service data sent by the first wireless local area network device according to the data plane network algorithm, and perform a data processing to the service data or send the service data to the second wireless local area network device.

13. A wireless local area network system, comprising a cloud control device (31) according to claim 12 and a wireless local area network device according to claim 11.

## Patentansprüche

1. Steuerverfahren für eine Übertragung in einem drahtlosen lokalen Netzwerk (WLAN, Wireless Local Area Network), umfassend:
Berichten (A40), durch eine drahtlose lokale Netzwerkvorrichtung, von Statusinformationen an eine Cloud-Steuervorrichtung, um der Cloud-Steuervorrichtung zu ermöglichen, Konfigurationsinformationen gemäß den Statusinformationen zu erzeugen und die Konfigurationsinformationen an die drahtlose lokale Netzwerkvorrichtung zu senden, wobei die Statusinformationen einen Durchsatz der drahtlosen lokalen Netzwerkvorrichtung und Interferenzbedingungen der drahtlosen lokalen Netzwerkvorrichtung umfassen;
Empfangen (A10), durch die drahtlose lokale Netzwerkvorrichtung, der durch die Cloud-Steuervorrichtung gesendeten Konfigurationsinformationen, wobei die Konfigurationsinformationen eine Steuerebenen-Weiterleitungsregel und eine Datenebenen-Weiterleitungsregel umfassen, wobei die Steuerebenen-Weiterleitungsregel umfasst: eine Steuerebenen-Datenidentifikation, einen Steuerebenen-Datentyp und eine Regel für ein Weiterleiten von Daten, wenn Daten mit der Steuerebenen-Datenidentifikation und/oder dem Steuerebenen-Datentyp übereinstimmen, und wobei, wenn die Daten mit der Steuerebenen-Datenidentifikation und/oder dem Steuerebenen-Datentyp übereinstimmen, die Daten ein Steuersignal sind, und wobei die Datenebenen-Weiterleitungsregel umfasst: eine Datenebenen-Datenidentifikation, einen Datenebenen-Datentyp, einen Weiterleitungsprioritätstyp, einen Zielport und eine Regel zum Bestimmen einer Priorität von Daten gemäß dem Weiterleitungsprioritätstyp und Weiterleiten der Daten von dem Zielport gemäß der Priorität der Daten, wenn die Daten mit der Datenebenen-Datenidentifikation und/oder dem Datenebenen-Datentyp übereinstimmen, und wobei, wenn die Daten mit der Datenebenen-Datenidentifikation und/oder dem Datenebenen-Datentyp übereinstimmen, die Daten Dienstdaten sind;
Durchführen (A20), durch die drahtlose lokale Netzwerkvorrichtung, einer Konfiguration eines Steuerebenen-Netzwerkalgorithmus gemäß der Steuerebenen-Weiterleitungsregel und Durchführen einer Konfiguration eines Datenebenen-Netzwerkalgorithmus gemäß der Datenebenen-Weiterleitungsregel, wobei der Steuerebenen-Netzwerkalgorithmus eine Regel zum Senden des Steuersignals gemäß einer Priorität des Steuersignals umfasst, und der Datenebenen-Netzwerkalgorithmus eine Signalregel zum Sicherstellen einer Dienstgüte, QoS (Quality of Service), und eine Regel für ein Routing und Weiterleiten der Dienstdaten umfasst;
Senden (A30), durch die drahtlose lokale Netzwerkvorrichtung, eines empfangenen Steuersignals gemäß dem Steuerebenen-Netzwerkalgorithmus und Senden der empfangenen Dienstdaten gemäß dem Datenebenen-Netzwerkalgorithmus.

2. Steuerverfahren für eine Übertragung in einem drahtlosen lokalen Netzwerk nach Anspruch 1, wobei das Senden, durch die drahtlose lokale Netzwerkvorrichtung, eines empfangenen Steuersignals gemäß dem Steuerebenen-Netzwerkalgorithmus umfasst:
Bestimmen, durch die drahtlose lokale Netzwerkvorrichtung, einer Priorität des empfangenen Steuersignals gemäß dem Steuerebenen-Netzwerkalgorithmus; und
Senden, durch die drahtlose lokale Netzwerkvorrichtung, des empfangenen Steuersignals gemäß der Priorität des Steuersignals.

3. Steuerverfahren für eine Übertragung in einem drahtlosen lokalen Netzwerk nach Anspruch 1 oder 2, wobei die drahtlose lokale Netzwerkvorrichtung ein "Fit"-Zugangspunkt ist, wobei der "Fit"- Zugangspunkt ein Zugangspunkt ist, der einen Teil von Medienzugangssteuerungs-, MAC (Medium Access Control), und physischen, PHY, Funktionen implementieren kann;
wobei, vor dem Empfangen, durch eine drahtlose lokale Netzwerkvorrichtung, von durch eine Cloud-Steuervorrichtung gesendeten Konfigurationsinformationen, das Verfahren ferner umfasst:
Senden, durch den "Fit"-Zugangspunkt, von Netzwerkzugangsinformationen an die Cloud-Steuervorrichtung;
Empfangen, durch den "Fit"-Zugangspunkt, von durch die Cloud-Steuervorrichtung gemäß den Netzwerkzugangsinformationen gesendeten Betriebseinstellungsinformationen und Einstellen eines Betriebsparameters des "Fit"-Zugangspunkts gemäß den Betriebseinstellungsinformationen;
Aussenden, durch den "Fit"-Zugangspunkt, eines Beacon-Datenpakets, um einer Station zu ermöglichen, das Beacon-Datenpaket zu überwachen und eine Zuordnungsauthentifizierung mit der Cloud-Steuervorrichtung über den "Fit"-Zugangspunkt durchzuführen; und
nachdem die Station und die Cloud-Steuervorrichtung die Zuordnungsauthentifizierung bestehen, Zugreifen, durch den "Fit"-Zugangspunkt, auf ein Netzwerk über die Station.

4. Steuerverfahren für eine Übertragung in einem drahtlosen lokalen Netzwerk nach Anspruch 3, wobei das Senden, durch die drahtlose lokale Netzwerkvorrichtung, von empfangenen Dienstdaten gemäß dem Datenebenen-Netzwerkalgorithmus ist:
Empfangen, durch den "Fit"-Zugangspunkt, von durch die Station gesendeten Uplink-Dienstdaten, Durchführen einer Entschlüsselungsverarbeitung an den Uplink-Dienstdaten und Senden der entschlüsselten Uplink-Dienstdaten gemäß dem Datenebenen-Netzwerkalgorithmus; oder
Empfangen, durch den "Fit"-Zugangspunkt, von durch eine Zwischenvorrichtung gesendeten Downlink-Daten, Durchführen einer Verschlüsselungsverarbeitung an den Downlink-Dienstdaten und Senden der verschlüsselten Downlink-Dienstdaten gemäß dem Datenebenen-Netzwerkalgorithmus.

5. Steuerverfahren für eine Übertragung in einem drahtlosen lokalen Netzwerk nach Anspruch 1 oder 2, wobei die drahtlose lokale Netzwerkvorrichtung ein "Fat"-Zugangspunkt ist, wobei der "Fat" Zugangspunkt ein Zugangspunkt ist, der alle MAC- und PHY-Funktionen implementieren kann;
wobei, vor dem Empfangen, durch eine drahtlose lokale Netzwerkvorrichtung, von durch eine Cloud-Steuervorrichtung gesendeten Konfigurationsinformation, das Verfahren ferner umfasst:
Senden, durch den "Fat"-Zugangspunkt, von Netzwerkzugangsinformationen an die Cloud-Steuervorrichtung;
Empfangen, durch den "Fat"-Zugangspunkt, von durch die Cloud-Steuervorrichtung gemäß den Netzwerkzugangsinformationen gesendeten Betriebseinstellungsinformationen und Einstellen eines Betriebsparameters des "Fat"-Zugangspunkts gemäß den Betriebseinstellungsinformationen;
Aussenden, durch den "Fat"-Zugangspunkt, eines Beacon-Datenpakets, um einer Station zu ermöglichen, das Beacon-Datenpaket zu überwachen;
Durchführen, durch den "Fat"-Zugangspunkt, einer Zuordnungsauthentifizierung mit der Station; und
nachdem der "Fat"-Zugangspunkt und die Station die Zuordnungsauthentifizierung bestehen, Zugreifen, durch den "Fat"-Zugangspunkt, auf ein Netzwerk über die Station.

6. Steuerverfahren für eine Übertragung in einem drahtlosen lokalen Netzwerk nach Anspruch 5, wobei das Senden, durch die drahtlose lokale Netzwerkvorrichtung, von gemäß dem Datenebenen-Netzwerkalgorithmus empfangenen Dienstdaten umfasst:
Empfangen, durch den "Fat"-Zugangspunkt, von durch die Station gesendeten Uplink-Dienstdaten, Durchführen einer Entschlüsselungsverarbeitung an den Uplink-Dienstdaten und Senden der entschlüsselten Uplink-Dienstdaten gemäß dem Datenebenen-Netzwerkalgorithmus; oder
Empfangen, durch den "Fat"-Zugangspunkt, von durch eine Zwischenvorrichtung gesendeten Downlink-Daten, Durchführen einer Verschlüsselungsverarbeitung an den Downlink-Dienstdaten und Senden der verschlüsselten Downlink-Dienstdaten gemäß dem Datenebenen-Netzwerkalgorithmus.

7. Steuerverfahren für eine Übertragung in einem drahtlosen lokalen Netzwerk nach Anspruch 1 oder 2, wobei die drahtlose lokale Netzwerkvorrichtung eine Zwischenvorrichtung ist, die zwischen der Cloud-Steuervorrichtung und dem Zugangspunkt verbunden ist;
wobei das Senden, durch die drahtlose lokale Netzwerkvorrichtung, von empfangenen Dienstdaten gemäß dem Datenebenen-Netzwerkalgorithmus ist:
Senden, durch die Zwischenvorrichtung, gemäß dem Datenebenen-Netzwerkalgorithmus, von von einem Zugangspunkt empfangenden Dienstdaten an die Cloud-Steuervorrichtung; oder
Senden, durch die Zwischenvorrichtung, gemäß dem Datenebenen-Netzwerkalgorithmus, von von der Cloud-Steuervorrichtung empfangenen Dienstdaten an den Zugangspunkt; oder
Senden, durch die Zwischenvorrichtung, gemäß dem Datenebenen-Netzwerkalgorithmus, von von dem Zugangspunkt empfangenen Dienstdaten an andere Zwischenvorrichtungen.

8. Steuerverfahren für eine Übertragung in einem drahtlosen lokalen Netzwerk, umfassend:
Erzeugen (B40), durch eine Cloud-Steuervorrichtung, von Konfigurationsinformation gemäß durch mehrere drahtlose lokale Netzwerkvorrichtungen berichteten empfangenen Statusinformationen, wobei die Statusinformationen einen Durchsatz der mehreren drahtlosen lokalen Netzwerkvorrichtungen und Interferenzbedingungen der mehreren drahtlosen lokalen Netzwerkvorrichtungen umfassen;
Senden (B10), durch die Cloud-Steuervorrichtung, der Konfigurationsinformationen an die mehreren drahtlosen lokalen Netzwerkvorrichtungen, wobei die Konfigurationsinformationen eine Steuerebenen-Weiterleitungsregel und eine Datenebenen-Weiterleitungsregel umfassen, um den mehreren drahtlosen lokalen Netzwerkvorrichtungen zu ermöglichen, eine Konfiguration eines Steuerebenen-Netzwerkalgorithmus gemäß der Steuerebenen-Weiterleitungsregel durchzuführen und eine Konfiguration eines Datenebenen-Netzwerkalgorithmus gemäß der Datenebenen-Weiterleitungsregel durchzuführen, wobei die mehreren drahtlosen lokalen Netzwerkvorrichtungen mindestens eine erste drahtlose lokale Netzwerkvorrichtung und eine zweite drahtlose lokale Netzwerkvorrichtung umfassen, wobei die Steuerebenen-Weiterleitungsregel umfasst: eine Steuerebenen-Datenidentifikation, einen Steuerebenen-Datentyp und eine Regel für ein Weiterleiten von Daten, wenn Daten mit der Steuerebenen-Datenidentifikation und/oder dem Steuerebenen-Datentyp übereinstimmen, und wobei, wenn die Daten mit der Steuerebenen-Datenidentifikation und/oder dem Steuerebenen-Datentyp übereinstimmen, die Daten ein Steuersignal sind, und wobei die Datenebenen-Weiterleitungsregel umfasst: eine Datenebenen-Datenidentifikation, einen Datenebenen-Datentyp, einen Weiterleitungsprioritätstyp, einen Zielport und eine Regel zum Bestimmen einer Priorität von Daten gemäß dem Weiterleitungsprioritätstyp und Weiterleiten der Daten von dem Zielport gemäß der Priorität der Daten, wenn die Daten mit der Datenebenen-Datenidentifikation und/oder dem Datenebenen-Datentyp übereinstimmen, und wobei, wenn die Daten mit der Datenebenen-Datenidentifikation und/oder dem Datenebenen-Datentyp übereinstimmen, der Datensatz ein Dienstdatensatz ist; wobei der Steuerebenen-Netzwerkalgorithmus eine Regel zum Senden des Steuersignals gemäß einer Priorität des Steuersignals umfasst, und der Datenebenen-Netzwerkalgorithmus eine Signalregel zum Sicherstellen einer Dienstgüte, QoS (Quality of Service), und eine Regel für ein Routing und Weiterleiten und der Dienstdaten umfasst;
Empfangen (B20), durch die Cloud-Steuervorrichtung, eines durch die erste drahtlose lokale Netzwerkvorrichtung gemäß dem Steuerebenen-Netzwerkalgorithmus gesendeten Steuersignals und Durchführen einer Steuerverarbeitung gemäß dem Steuersignals oder Senden des Steuersignals an die zweite drahtlose lokale Netzwerkvorrichtung; und
Empfangen (B30), durch die Cloud-Steuervorrichtung, von durch die erste drahtlose lokale Netzwerkvorrichtung gemäß dem Datenebenen-Netzwerkalgorithmus gesendeten Dienstdaten und Durchführen einer Datenverarbeitung an den Dienstdaten oder Senden der Dienstdaten an die zweite drahtlose lokale Netzwerkvorrichtung.

9. Steuerverfahren für eine Übertragung in einem drahtlosen lokalen Netzwerk nach Anspruch 8, wobei das Erzeugen, durch die Cloud-Steuervorrichtung, der Konfigurationsinformationen gemäß durch die mehreren drahtlosen lokalen Netzwerkvorrichtungen berichteten empfangenen Statusinformationen, ist:
Zuweisen, durch die Cloud-Steuervorrichtung, einer Datenverarbeitungsressource und einer Speicherressource von mindestens einer Cloud-Verarbeitungseinheit und Erzeugen der Konfigurationsinformationen gemäß den Statusinformationen über die Datenverarbeitungsressource und die Speicherressource, die zugewiesen sind.

10. Steuerverfahren für eine Übertragung in einem drahtlosen lokalen Netzwerk nach Anspruch 8, wobei das Erzeugen, durch die Cloud-Steuervorrichtung, der Konfigurationsinformation gemäß durch die mehreren drahtlosen lokalen Netzwerkvorrichtungen berichteten empfangenen Statusinformationen, ist:
Erhalten, durch die Cloud-Steuervorrichtung, von virtuellen Netzwerkzustandsinformationen und einer virtuellen Vorrichtungsgröße, Zuweisen einer virtuellen Ressource von mindestens einer Cloud-Verarbeitungseinheit gemäß den virtuellen Netzwerkzustandsinformationen und der virtuellen Vorrichtungsgröße, die erhalten werden, und Erzeugen der Konfigurationsinformationen gemäß den Statusinformationen über die zugewiesenen virtuelle Ressource.

11. Drahtlose lokale Netzwerkvorrichtung (81), umfassend:
eine Berichtseinheit (13), die konfiguriert ist, Statusinformationen an eine Cloud-Steuervorrichtung zu berichten, um der Cloud-Steuervorrichtung zu ermöglichen, Konfigurationsinformationen gemäß den Statusinformationen zu erzeugen und die Konfigurationsinformationen an die drahtlose lokale Netzwerkvorrichtung zu senden, wobei die Statusinformationen einen Durchsatz der drahtlosen lokalen Netzwerkvorrichtung und Interferenzbedingungen der drahtlosen lokalen Netzwerkvorrichtung umfassen;
eine Empfangseinheit (10), die konfiguriert ist, die durch die Cloud-Steuervorrichtung gesendeten Konfigurationsinformationen zu empfangen, wobei die Konfigurationsinformationen eine Steuerebenen-Weiterleitungsregel und eine Datenebenen-Weiterleitungsregel umfassen, wobei die Steuerebenen-Weiterleitungsregel umfasst: eine Steuerebenen-Datenidentifikation, einen Steuerebenen-Datentyp und eine Regel für ein Weiterleiten von Daten, wenn Daten mit der Steuerebenen-Datenidentifikation und/oder dem Steuerebenen-Datentyp übereinstimmen, und wobei, wenn die Daten mit der Steuerebenen-Datenidentifikation und/oder dem Steuerebenen-Datentyp übereinstimmen, die Daten ein Steuersignal sind, und wobei die Datenebenen-Weiterleitungsregel umfasst: eine Datenebenen-Datenidentifikation, einen Datenebenen-Datentyp, einen Weiterleitungsprioritätstyp, einen Zielport und eine Regel zum Bestimmen einer Priorität von Daten gemäß dem Weiterleitungsprioritätstyp und Weiterleiten der Daten von dem Zielport gemäß der Priorität der Daten, wenn die Daten mit der Datenebenen-Datenidentifikation und/oder dem Datenebenen-Datentyp übereinstimmen, und wobei, wenn die Daten mit der Datenebenen-Datenidentifikation und/oder dem Datenebenen-Datentyp übereinstimmen, die Daten Dienstdaten sind;
eine Konfigurationseinheit (11), die mit der Empfangseinheit gekoppelt und konfiguriert ist, eine Konfiguration eines Steuerebenen-Netzwerkalgorithmus gemäß der Steuerebenen-Weiterleitungsregel durchzuführen und eine Konfiguration eines Datenebenen-Netzwerkalgorithmus gemäß einer Datenebenen-Weiterleitungsregel durchzuführen, wobei der Steuerebenen-Netzwerkalgorithmus eine Regel zum Senden des Steuersignals gemäß der Priorität des Steuersignals umfasst, und der Datenebenen-Netzwerkalgorithmus eine Signalregel zum Sicherstellen einer Dienstgüte, QoS (Quality of Service), und eine Regel für ein Routing und Weiterleiten der Dienstdaten umfasst;
eine erste Verarbeitungseinheit (12), die mit der Konfigurationseinheit gekoppelt und konfiguriert ist, ein gemäß dem Steuerebenen-Netzwerkalgorithmus empfangenes Steuersignal zu senden und gemäß dem Datenebenen-Netzwerkalgorithmus empfangene Dienstdaten zu senden.

12. Cloud-Steuervorrichtung (82), umfassend:
eine Konfigurationsinformationen-Erzeugungseinheit (24), die konfiguriert ist, Konfigurationsinformationen gemäß von mehreren drahtlosen lokalen Netzwerkvorrichtungen berichteten empfangenen Statusinformationen zu erzeugen, wobei die Statusinformationen einen Durchsatz der mehreren drahtlosen lokalen Netzwerkvorrichtungen und Interferenzbedingungen der mehreren drahtlosen lokalen Netzwerkvorrichtungen umfassen;
eine Konfigurationssendeeinheit (21), die konfiguriert ist, die Konfigurationsinformationen an die mehreren drahtlosen lokalen Netzwerkvorrichtungen zu senden, wobei die Konfigurationsinformationen eine Steuerebenen-Weiterleitungsregel und eine Datenebenen-Weiterleitungsregel umfassen, um den mehreren drahtlosen lokalen Netzwerkvorrichtungen zu ermöglichen, eine Konfiguration eines Steuerebenen-Netzwerkalgorithmus gemäß der Steuerebenen-Weiterleitungsregel durchzuführen und eine Konfiguration eines Datenebenen-Netzwerkalgorithmus gemäß der Datenebenen-Weiterleitungsregel durchzuführen, wobei die mehreren drahtlosen lokalen Netzwerkvorrichtungen mindestens eine erste drahtlose lokale Netzwerkvorrichtung und eine zweite drahtlose lokale Netzwerkvorrichtung umfassen, wobei die Steuerebenen-Weiterleitungsregel umfasst: eine Steuerebenen-Datenidentifikation, einen Steuerebenen-Datentyp und eine Regel für ein Weiterleiten von Daten, wenn Daten mit der Steuerebenen-Datenidentifikation und/oder dem Steuerebenen-Datentyp übereinstimmen, und wobei, wenn die Daten mit der Steuerebenen-Datenidentifikation und/oder dem Steuerebenen-Datentyp übereinstimmen, die Daten ein Steuersignal sind, und wobei die Datenebenen-Weiterleitungsregel umfasst: eine Datenebenen-Datenidentifikation, einen Datenebenen-Datentyp, einen Weiterleitungsprioritätstyp, einen Zielport und eine Regel zum Bestimmen einer Priorität von Daten gemäß dem Weiterleitungsprioritätstyp und Weiterleiten der Daten von dem Zielport gemäß der Priorität der Daten, wenn die Daten mit der Datenebenen-Datenidentifikation und/oder dem Datenebenen-Datentyp übereinstimmen, und wobei, wenn die Daten mit der Datenebenen-Datenidentifikation und/oder dem Datenebenen-Datentyp übereinstimmen, die Daten Dienstdaten sind, und Weiterleiten der Dienstdaten; wobei der Steuerebenen-Netzwerkalgorithmus eine entsprechende Regel zum Senden des Steuersignals gemäß der Priorität des Steuersignals umfasst, und der Datenebenen-Netzwerkalgorithmus eine Signalregel zum Sicherstellen einer Dienstgüte, QoS (Quality of Service), und eine Regel für ein Routing und Weiterleiten von Dienstdaten umfasst;
eine zweite Verarbeitungseinheit (22), die konfiguriert ist, ein durch die erste drahtlose lokale Netzwerkvorrichtung gemäß dem Steuerebenen-Netzwerkalgorithmus gesendetes Steuersignal zu empfangen und eine Steuerverarbeitung gemäß dem Steuersignal durchzuführen oder das Steuersignal an die zweite drahtlose lokale Netzwerkvorrichtung zu senden; und
eine dritte Verarbeitungseinheit (23), die konfiguriert ist, durch die erste drahtlose lokale Netzwerkvorrichtung gemäß dem Datenebenen-Netzwerkalgorithmus gesendete Dienstdaten zu empfangen und eine Datenverarbeitung an den Dienstdaten durchzuführen oder die Dienstdaten an die zweite drahtlose lokale Netzwerkvorrichtung zu senden.

13. Drahtloses lokales Netzwerksystem, umfassend eine Cloud-Steuervorrichtung (31) nach Anspruch 12 und eine drahtlose lokale Netzwerkvorrichtung nach Anspruch 11.

## Revendications

1. Procédé de commande de la transmission dans un réseau local sans fil, comprenant :
le rapport (A40), par un dispositif de réseau local sans fil, d'informations d'état à un dispositif de commande en nuage pour permettre au dispositif de commande en nuage de générer des informations de configuration en fonction des informations d'état et envoyer les informations de configuration au dispositif de réseau local sans fil, les informations d'état comprenant un débit du dispositif de réseau local sans fil et des conditions d'interférence du dispositif de réseau local sans fil ;
la réception (A10), par le dispositif de réseau local sans fil, des informations de configuration envoyées par le dispositif de commande en nuage, les informations de configuration comprenant une règle d'acheminement du plan de commande et une règle d'acheminement du plan de données, la règle d'acheminement du plan de commande comprenant : une identification de données de plan de commande, un type de données de plan de commande, et une règle pour acheminer des données lorsque des données sont en conformité avec l'identification de données de plan de commande et/ou le type de données de plan de commande, et lorsque les données sont en conformité avec l'identification de données de plan de commande et/ou le type de données de plan de commande, les données sont une signalisation de commande, et la règle d'acheminement du plan de données comprenant : une identification de données de plan de données, un type de données de plan de données, un type de priorité d'acheminement, un port de destination et une règle pour déterminer une priorité des données en fonction du type de priorité d'acheminement et l'acheminement des données à partir du port de destination en fonction de la priorité des données lorsque les données sont en conformité avec l'identification de données de plan de données et/ou le type de données de plan de données, et lorsque les données sont en conformité avec l'identification de données de plan de données et/ou le type de données de plan de données, les données sont des données de service ;
la réalisation (A20), par le dispositif de réseau local sans fil, de la configuration d'un algorithme de réseau du plan de commande en fonction de la règle d'acheminement du plan de commande, et la réalisation d'une configuration d'un algorithme de réseau du plan de données en fonction de la règle d'acheminement du plan de données, l'algorithme de réseau du plan de commande comprenant une règle d'envoi de la signalisation de commande en fonction de la priorité de la signalisation de commande, et l'algorithme de réseau du plan de données comprenant une règle de signalisation pour garantir la qualité de service, QoS, et une règle de routage et d'acheminement des données de service ;
l'envoi (A30), par le dispositif de réseau local sans fil, d'une signalisation de commande reçue conformément à l'algorithme de réseau du plan de commande, et l'envoi des données de service reçues conformément à l'algorithme de réseau du plan de données.

2. Procédé de commande de la transmission dans un réseau local sans fil selon la revendication 1, l'envoi, par le dispositif de réseau local sans fil, d'une signalisation de commande reçue conformément à l'algorithme de réseau du plan de commande comprenant :
la détermination, par le dispositif de réseau local sans fil, d'une priorité de la signalisation de commande reçue conformément à l'algorithme de réseau du plan de commande ; et
l'envoi, par le dispositif de réseau local sans fil, de la signalisation de commande reçue en fonction de la priorité de la signalisation de commande.

3. Procédé de commande de la transmission dans un réseau local sans fil selon la revendication 1 ou 2, le dispositif de réseau local sans fil étant un point d'accès intermédiaire, le point d'accès intermédiaire étant un point d'accès qui peut mettre en oeuvre une partie de fonctions de commande d'accès au support, MAC, et de lien physique, PHY ;
avant la réception, par un dispositif de réseau local sans fil, d'informations de configuration envoyées par un dispositif de commande en nuage, le procédé comprenant en outre :
l'envoi, par le point d'accès intermédiaire, d'informations d'accès au réseau au dispositif de commande en nuage ;
la réception, par le point d'accès intermédiaire, d'informations de réglage de fonctionnement envoyées par le dispositif de commande en nuage en fonction des informations d'accès au réseau, et le réglage d'un paramètre de fonctionnement du point d'accès intermédiaire en fonction des informations de réglage de fonctionnement ;
la diffusion, par le point d'accès intermédiaire, d'une trame de balise pour permettre à une station de surveiller la trame de balise et réaliser une authentification d'association avec le dispositif de commande en nuage par l'intermédiaire du point d'accès intermédiaire ; et
après que la station et le dispositif de commande en nuage réussissent l'authentification d'association, l'accès, par le point d'accès intermédiaire, à un réseau par l'intermédiaire de la station.

4. Procédé de commande de la transmission dans un réseau local sans fil selon la revendication 3, l'envoi, par le dispositif de réseau local sans fil, des données de service reçues conformément à l'algorithme de réseau du plan de données consistant en :
la réception, par le point d'accès intermédiaire, de données de service de liaison montante envoyées par la station, la réalisation d'un traitement de déchiffrement sur les données de service de liaison montante, et l'envoi des données de service de liaison montante déchiffrées conformément à l'algorithme de réseau du plan de données ; ou,
la réception, par le point d'accès intermédiaire, de données de liaison descendante envoyées par un dispositif intermédiaire, la réalisation d'un traitement de chiffrement sur les données de service de liaison descendante, et l'envoi des données de service de liaison descendante chiffrées conformément à l'algorithme de réseau du plan de données.

5. Procédé de commande de la transmission dans un réseau local sans fil selon la revendication 1 ou 2, le dispositif de réseau local sans fil étant un point d'accès fat, le point d'accès fat étant un point d'accès qui peut mettre en oeuvre toutes les fonctions MAC et PHY ;
avant la réception, par un dispositif de réseau local sans fil, d'informations de configuration envoyées par un dispositif de commande en nuage, le procédé comprenant en outre :
l'envoi, par le point d'accès fat, d'informations d'accès au réseau au dispositif de commande en nuage ;
la réception, par le point d'accès fat, d'informations de réglage de fonctionnement envoyées par le dispositif de commande en nuage en fonction des informations d'accès au réseau, et le réglage d'un paramètre de fonctionnement du point d'accès fat en fonction des informations de réglage de fonctionnement ;
la diffusion, par le point d'accès fat, d'une trame de balise pour permettre à une station de surveiller la trame de balise ;
la réalisation, par le point d'accès fat, d'une authentification d'association avec la station ; et
après que le point d'accès fat et la station réussissent l'authentification d'association, l'accès, par le point d'accès fat, à un réseau par l'intermédiaire de la station.

6. Procédé de commande de la transmission dans un réseau local sans fil selon la revendication 5, l'envoi, par le dispositif de réseau local sans fil, de données de service reçues conformément à l'algorithme de réseau du plan de données comprenant :
la réception, par le point d'accès fat, de données de service de liaison montante envoyées par la station, la réalisation d'un traitement de déchiffrement sur les données de service de liaison montante, et l'envoi des données de service de liaison montante déchiffrées conformément à l'algorithme de réseau du plan de données ; ou,
la réception, par le point d'accès fat, de données de liaison descendante envoyées par un dispositif intermédiaire, la réalisation d'un traitement de chiffrement sur les données de service de liaison descendante, et l'envoi des données de service de liaison descendante chiffrées conformément à l'algorithme de réseau du plan de données.

7. Procédé de commande de la transmission dans un réseau local sans fil selon la revendication 1 ou 2, le dispositif de réseau local sans fil étant un dispositif intermédiaire connecté entre le dispositif de commande en nuage et le point d'accès : l'envoi, par le dispositif de réseau local sans fil, de données de service reçues conformément à l'algorithme de réseau du plan de données consistant en :
l'envoi, par le dispositif intermédiaire, conformément à l'algorithme de réseau du plan de données, des données de service reçues à partir d'un point d'accès au dispositif de commande en nuage ; ou
l'envoi, par le dispositif intermédiaire, conformément à l'algorithme de réseau du plan de données, des données de service reçues à partir du dispositif de commande en nuage au point d'accès : ou
l'envoi, par le dispositif intermédiaire, conformément à l'algorithme de réseau du plan de données, des données de service reçues à partir du point d'accès à d'autres dispositifs intermédiaires.

8. Procédé de commande de la transmission dans un réseau local sans fil, comprenant :
la génération (B40), par un dispositif de commande en nuage, des informations de configuration en fonction d'informations d'état reçues rapportées par de multiples dispositifs de réseau local sans fil, les informations d'état comprenant un débit des multiples dispositifs de réseau local sans fil et des conditions d'interférence des multiples dispositifs de réseau local sans fil ;
l'envoi (B10), par le dispositif de commande en nuage, des informations de configuration aux multiples dispositifs de réseau local sans fil, les informations de configuration comprenant une règle d'acheminement du plan de commande et une règle d'acheminement du plan de données, pour permettre aux multiples dispositifs de réseau local sans fil de réaliser une configuration d'un algorithme de réseau du plan de commande en fonction de la règle d'acheminement du plan de commande, et réaliser une configuration d'un algorithme de réseau du plan de données en fonction de la règle d'acheminement du plan de données, les multiples dispositifs de réseau local sans fil comprenant au moins un premier dispositif de réseau local sans fil et un second dispositif de réseau local sans fil, la règle d'acheminement du plan de commande comprenant : une identification de données de plan de commande, un type de données de plan de commande et une règle pour acheminer des données lorsque des données sont en conformité avec l'identification de données de plan de commande et/ou le type de données de plan de commande, et lorsque les données sont en conformité avec l'identification de données de plan de commande et/ou le type de données de plan de commande, les données sont une signalisation de commande, et la règle d'acheminement du plan de données comprenant : une identification de données de plan de données, un type de données de plan de données, un type de priorité d'acheminement, un port de destination, et une règle pour déterminer une priorité des données en fonction du type de priorité d'acheminement et l'acheminement des données à partir du port de destination en fonction de la priorité des données lorsque les données sont en conformité avec l'identification de données de plan de données et/ou le type de données de plan de données, et lorsque les données sont en conformité avec l'identification de données de plan de données et/ou le type de données de plan de données, les données sont des données de service ; l'algorithme de réseau du plan de commande comprenant une règle d'envoi de la signalisation de commande en fonction de la priorité de la signalisation de commande, et l'algorithme de réseau du plan de données comprenant une règle de signalisation pour garantir la qualité de service, QoS, et une règle de routage et d'acheminement des données de service ;
la réception (B20), par le dispositif de commande en nuage, d'une signalisation de commande envoyée par le premier dispositif de réseau local sans fil conformément à l'algorithme de réseau du plan de commande, et la réalisation d'un traitement de commande en fonction de la signalisation de commande ou l'envoi de la signalisation de commande au second dispositif de réseau local sans fil ; et
la réception (B30), par le dispositif de commande en nuage, des données de service envoyées par le premier dispositif de réseau local sans fil conformément à l'algorithme de réseau du plan de données, et la réalisation d'un traitement de données sur les données de service ou l'envoi des données de service au second dispositif de réseau local sans fil.

9. Procédé de commande de la transmission dans un réseau local sans fil selon la revendication 8, la génération, par le dispositif de commande en nuage, des informations de configuration en fonction des informations d'état reçues rapportées par les multiples dispositifs de réseau local sans fil consistant en :
l'attribution, par le dispositif de commande en nuage, d'une ressource informatique et d'une ressource de stockage à partir d'au moins une unité de traitement en nuage, et la génération des informations de configuration en fonction des informations d'état par l'intermédiaire de la ressource informatique et de la ressource de stockage qui sont attribuées.

10. Procédé de commande de la transmission dans un réseau local sans fil selon la revendication 8, la génération, par le dispositif de commande en nuage, des informations de configuration en fonction des informations d'état reçues rapportées par les multiples dispositifs de réseau local sans fil consistant en :
l'acquisition, par le dispositif de commande en nuage, des informations d'état de réseau virtuel et de la quantité de dispositifs virtuels, l'attribution d'une ressource virtuelle à partir d'au moins une unité de traitement en nuage en fonction des informations d'état de réseau virtuel et de la quantité de dispositifs virtuels qui sont acquis, et la génération des informations de configuration en fonction des informations d'état par l'intermédiaire de la ressource virtuelle attribuée.

11. Dispositif de réseau local sans fil (81), comprenant :
une unité de rapport (13), configurée pour rapporter des informations d'état à un dispositif de commande en nuage pour permettre au dispositif de commande en nuage de générer des informations de configuration en fonction des informations d'état et d'envoyer les informations de configuration au dispositif de réseau local sans fil, les informations d'état comprenant un débit du dispositif de réseau local sans fil et des conditions d'interférence du dispositif de réseau local sans fil ;
une unité de réception (10) configurée pour recevoir les informations de configuration envoyées par le dispositif de commande en nuage, les informations de configuration comprenant une règle d'acheminement du plan de commande et une règle d'acheminement du plan de données, la règle d'acheminement du plan de commande comprenant : une identification de données de plan de commande, un type de données de plan de commande et une règle pour acheminer des données lorsque des données sont en conformité avec l'identification de données de plan de commande et/ou le type de données de plan de commande, et lorsque les données sont en conformité avec l'identification de données de plan de commande et/ou le type de données de plan de commande, les données sont une signalisation de commande, et la règle d'acheminement du plan de données comprenant : une identification de données de plan de données, un type de données de plan de données, un type de priorité d'acheminement, un port de destination, et une règle pour déterminer une priorité des données en fonction du type de priorité d'acheminement et l'acheminement des données à partir du port de destination en fonction de la priorité des données lorsque les données sont en conformité avec l'identification de données de plan de données et/ou le type de données de plan de données, et lorsque les données sont en conformité avec l'identification de données de plan de données et/ou le type de données de plan de données, les données sont des données de service ;
une unité de configuration (11), couplée à l'unité de réception et configurée pour réaliser une configuration d'un algorithme de réseau du plan de commande en fonction de la règle d'acheminement du plan de commande, et réaliser une configuration d'un algorithme de réseau du plan de données en fonction de la règle d'acheminement du plan de données, l'algorithme de réseau du plan de commande comprenant une règle d'envoi de la signalisation de commande en fonction de la priorité de la signalisation de commande, et l'algorithme de réseau du plan de données comprenant une règle de signalisation pour garantir la qualité de service, QoS, et une règle de routage et d'acheminement des données de service ;
une première unité de traitement (12), couplée à l'unité de configuration et configurée pour envoyer une signalisation de commande reçue conformément à l'algorithme de réseau du plan de commande, et envoyer des données de service reçues conformément à l'algorithme de réseau du plan de données.

12. Dispositif de commande en nuage (82), comprenant :
une unité de génération d'informations de configuration (24) configurée pour générer des informations de configuration en fonction d'informations d'état reçues rapportées par de multiples dispositifs de réseau local sans fil, les informations d'état comprenant un débit des multiples dispositifs de réseau local sans fil et des conditions d'interférence des multiples dispositifs de réseau local sans fil ;
une unité d'envoi de configuration (21) configurée pour envoyer les informations de configuration aux multiples dispositifs de réseau local sans fil, les informations de configuration comprenant une règle d'acheminement du plan de commande et une règle d'acheminement du plan de données, pour permettre aux multiples dispositifs de réseau local sans fil de réaliser une configuration d'un algorithme de réseau du plan de commande en fonction de la règle d'acheminement du plan de commande, et réaliser une configuration d'un algorithme de réseau du plan de données en fonction de la règle d'acheminement du plan de données, les multiples dispositifs de réseau local sans fil comprenant au moins un premier dispositif de réseau local sans fil et un second dispositif de réseau local sans fil, la règle d'acheminement du plan de commande comprenant : une identification de données de plan de commande, un type de données de plan de commande et une règle pour acheminer des données lorsque des données sont en conformité avec l'identification de données de plan de commande et/ou le type de données de plan de commande, et lorsque les données sont en conformité avec l'identification de données de plan de commande et/ou le type de données de plan de commande, les données sont une signalisation de commande, et la règle d'acheminement du plan de données comprenant : une identification de données de plan de données, un type de données de plan de données, un type de priorité d'acheminement, un port de destination et une règle pour déterminer une priorité des données en fonction du type de priorité d'acheminement et l'acheminement des données à partir du port de destination en fonction de la priorité des données lorsque les données sont en conformité avec l'identification de données de plan de données et/ou le type de données de plan de données, et lorsque les données sont en conformité avec l'identification de données de plan de données et/ou le type de données de plan de données, les données sont des données de service, et l'acheminement des données de service ; l'algorithme de réseau du plan de commande comprenant une règle correspondante d'envoi de la signalisation de commande en fonction de la priorité de la signalisation de commande, et l'algorithme de réseau du plan de données comprenant une règle de signalisation pour garantir la qualité de service, QoS, et une règle de routage et d'acheminement des données de service ;
une seconde unité de traitement (22), configurée pour recevoir une signalisation de commande envoyée par le premier dispositif de réseau local sans fil conformément à l'algorithme de réseau du plan de commande, et réaliser un traitement de commande en fonction de la signalisation de commande ou envoyer la signalisation de commande au second dispositif de réseau local sans fil ; et
une troisième unité de traitement (23), configurée pour recevoir des données de service envoyées par le premier dispositif de réseau local sans fil conformément à l'algorithme de réseau du plan de données, et réaliser un traitement de données sur les données de service ou envoyer les données de service au second dispositif de réseau local sans fil.

13. Système de réseau local sans fil, comprenant un dispositif de commande en nuage (31) selon la revendication 12 et un dispositif de réseau local sans fil selon la revendication 11.
